# EUROPÄISCHE PATENTSCHRIFT

(11) **EP 2 925 487 B1**
(45) Veröffentlichungstag und Bekanntmachung des Hinweises auf die Patenterteilung: **03.05.2017**
(21) Anmeldenummer: 13796058.9
(22) Anmeldetag: 26.11.2013
(51) Int. Cl.: B23Q 3/06, B25B 1/22, B25B 1/24, B23Q 16/06

(54) **WERKSTUECKHALTEVORRICHTUNG UND VERFAHREN ZUR BESTUECKUNG EINER WERKSTUECKHALTEVORRICHTUNG MIT EINEM WERKSTUECK**
WORKPIECE HOLDER DEVICE AND METHOD FOR MOUNTING A WORKPIECE IN A WORKPIECE HOLDING DEVICE
DISPOSITIF DE RETENUE DE PIÈCE ET PROCÉDÉ POUR MUNIR UN DISPOSITIF DE RETENUE DE PIÈCE D'UNE PIÈCE

(30) Priorität: 27.11.2012 DE 102012111473
(43) Veröffentlichungstag der Anmeldung: 07.10.2015
(73) Patentinhaber: Magerl Feinmechanik GmbH, 84082 Laberweinting (DE)
(72) Erfinder: MAGERL, Bernhard, 84082 Laberweinting (DE)
(74) Vertreter: Holzwarth-Rochford, Andreas
(86) Internationale Anmeldenummer: PCT/EP2013/074787
(87) Internationale Veröffentlichungsnummer: WO 2014/083017

(56) Entgegenhaltungen:
- EP-A1- 0 547 554
- EP-A1- 1 593 455
- EP-A2- 2 070 655
- WO-A1-2007/126283
- DE-A1- 10 258 956
- DE-A1-102004 036 371
- DE-U1-202009 013 241
- US-A1- 2002 109 282

## Beschreibung

Die vorliegende Erfindung betrifft eine Werkstückhaltevorrichtung für mehrseitig zu bearbeitende Werkstücke, wobei das Werkstück zwischen einer mit zumindest einer Stützspindel der Werkstückhaltevorrichtung in Wirkverbindung stehenden und um eine erste Achse drehbaren ersten Werkstückhalterung und zumindest einer mit zumindest einer Antriebsspindel der Werkstückhaltevorrichtung in Wirkverbindung stehenden und um die erste Achse drehbaren zweiten Werkstückhalterung bezüglich der ersten Achse axial, radial und durch Kraftschluss mittels einer zwischen der ersten Werkstückhalterung und der zweiten Werkstückhalterung in axialer Richtung der ersten Achse schraubstockartig aufbaubaren und auf gegenüberliegende Seiten des Werkstücks wirkenden Klemmkraft haltbar ist, wobei die erste Werkstückhalterung zumindest ein erstes Klemmstück mit einer der zweiten Werkstückhalterung und/oder dem Werkstück zugewandten ersten ebenen Klemmfläche und die zweite Werkstückhalterung zumindest ein zweites Klemmstück mit einer der ersten Werkstückhalterung und/oder dem Werkstück zugewandten zweiten ebenen Klemmfläche aufweist bzw. aufweisen, wobei die Werkstückhaltevorrichtung ferner zumindest eine Arretiereinrichtung, mittels der die erste Werkstückhalterung und/oder das erste Klemmstück in zumindest einer ersten vorbestimmten Drehposition um die erste Achse arretierbar ist bzw. sind, umfasst.

Werkstückhaltevorrichtungen sind aus dem Stand der Technik grundsätzlich bekannt. So offenbart beispielsweise die DE 32 14 284 C2 einen Maschinen-Schraubstock. Zum Einspannen und Halten von Werkstücken während einer maschinellen Bearbeitung ist eine feststehende Spannbacke und ein auf einer Grundplatte verschieblich geführter, eine zweite Spannbacken haltender Schlitten vorgesehen. Die zweite Spannbacke kann in spannende Anlage an ein zwischen den Spannbacken eingesetztes Werkstück verfahren werden bzw. in eine Werkstückfreigabestellung zurückgestellt werden.

Eine gattungsgemäße Werkstückhaltevorrichtung ist darüber hinaus aus der DE 42 37 422 C2 bekannt. Es wird vorgeschlagen, dass zwei Werkstückhalterungen der Werkstückhaltevorrichtung als gegen zwei einander gegenüberliegende Flächen eines Werkstücks schraubstockartig angreiffbare Klemmstücke ausgebildet sind, die im Wesentlich nur kraftschlüssig wirkende Klemmkräfte aufbauen. Dabei wird die Form der Klemmstücke dem Querschnitt eines zu haltenden Werkstücks im Bereich einer Spannfläche oder mehrerer gleichzeitig zu haltender gleichartiger Werkstücke im Bereich von deren Spannflächen angepasst.

Darüber hinaus offenbart die DE 197 01 394 C1 eine gattungsgemäße Haltevorrichtung für mehrseitig zu bearbeitende Werkstücke. Um elastische Verformungen der Haltevorrichtung beim Einspannen von Werkstücken zu kompensieren, wird vorgeschlagen, dass eine Antriebsspindel und eine Stützspindel in einem unelastischen Zustand so gelagert sind, dass ihre Achsen gegen eine Werkzeugmaschine eine Neigung um einen jeweiligen Winkel aufweisen. Dieser Winkel geht nach Einspannen eines Werkstücks mit einer Nennklemmkraft in eine koaxiale Ausrichtung der beiden Achsen über.

Auch beschreibt die EP 1 593 455 A1 eine gattungsgemäße Haltevorrichtung für Werkstücke, die mehrseitig zu bearbeiten sind.

Die aus dem Stand der Technik bekannten Werkstückhaltevorrichtungen haben sich grundsätzlich bewährt.

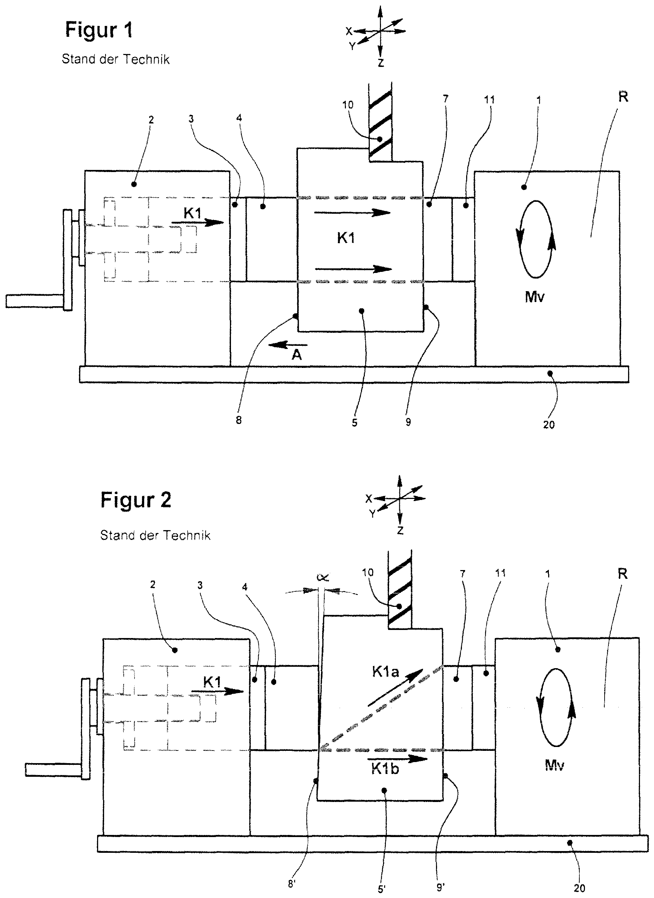

In den Figuren 1 und 2 ist der prinzipielle Aufbau einer gattungsgemäßen Werkstückhaltevorrichtung, wie sie aus dem Stand der Technik bekannt ist, dargestellt.

Die Werkstückhaltevorrichtung umfasst ein erstes Gehäuse 1 sowie ein zweites Gehäuse 2. Das zweite Gehäuse 2 dient zur Lagerung einer Stützspindel 3, die über ein erstes Klemmstück 4 an einem Werkstück 5 kraftschlüssig anliegt. An der dem Gehäuse 2 bzw. der Stützspindel 3 abgewandten Seite des Werkstücks 5 liegt ein Klemmstück 7 kraftschlüssig an. Dabei kontaktiert das erste Klemmstück 4 eine Spannfläche 8 des Werkstücks 5 während das Klemmstück 7 eine Spannfläche 9 des Werkstücks 5 kontaktiert. Mittels eines Werkzeugs in Form eines Fräsers 10 kann das Werkstück 5 bearbeitet werden.

Um eine mehrseitige Bearbeitung des Werkstücks 5 zu ermöglichen, steht das zweite Klemmstück 7 mit einer Antriebsspindel 11, die in dem Gehäuse 1 gelagert ist, in Verbindung. Das Gehäuse 1 und das Gehäuse 2 sind an einem Maschinengestell 20 gelagert.

In der in Figur 1 dargestellten Konstellation weist das Werkstück ideal planparallele Spannflächen 8, 9 auf. Dies bewirkt, dass eine mittels der Stützspindel 3 aufgebaute Klemmkraft K1 über das Klemmstück 4 über den größtmöglichen Bereich der Klemmfläche 8 gleichmäßig auf das Werkstück 5 übertragen wird, insbesondere die Klemmkraft K1 im Bereich des Klemmstücks 4 bzw. der Klemmfläche 8 parallel zu einer ersten Achse R, um die das Werkstück mittels der Antriebsspindel 11 drehbar ist, verläuft.

In Figur 2 ist die Werkstückhaltevorrichtung der Figur 1 in einem Zustand dargestellt, in dem ein Werkstück 5' eingespannt ist, welches jedoch keine planparallele zueinander verlaufenden Spannflächen 8', 9' aufweist. Die Spannfläche 8' ist insbesondere um einen Winkel α gegenüber der Spannfläche 9' geneigt.

Aufgrund der Tatsache, dass das Klemmstück 4 nicht vollständig an der Spannfläche 8' des Werkstücks 5' anliegt, führt die Klemmkraft K1 zur Ausbildung zweier Kraftkomponenten K1a und K1b innerhalb des Werkstücks 5'. Dabei ist die Kraftkomponente K1a insbesondere nicht parallel zu der ersten Achse R ausgebildet, es entsteht also eine Kraftkomponente in eine radiale Richtung der ersten Achse R. Insbesondere bei einer Rotation des Werkstücks 5' um die erste Achse R kann es so zu einer Bewegung des Werkstücks 5' relativ zu dem Klemmstück 4 im Bereich der Spannfläche 8' kommen. Dies kann beispielsweise ein Verkippen des Werkstücks sein oder eine Bewegung in radial Richtung der Achse R. Auch kann durch den punktuellen Krafteinfluss in das Werkstück 5' eine Struktur des Werkstücks 5' in Mitleidenschaft gezogen werden, insbesondere das Werkstück 5' verformt werden.

Sowohl die mögliche Relativbewegung des Werkstücks 5' in Bezug auf das Klemmstück 4 als auch die Verformung des Klemmstücks 5' führt dazu, dass eine präzise Bearbeitung des Werkstücks 5' nicht möglich ist.

Es ist daher Aufgabe der vorliegenden Erfindung die gattungsgemäße Werkstückhaltevorrichtung derartig weiterzuentwickeln, dass die Nachteile des Stands der Technik überwunden werden, insbesondere eine Werkstückhaltevorrichtung bereitgestellt wird, bei welcher eine präzise Bearbeitung eines Werkstücks in weiten Toleranzbereichen bezüglich der Form des Werkstücks ermöglicht wird, insbesondere eine Bewegung des Werkstücks in eine radiale Richtung einer ersten Achse einer Antriebsspindel und/oder eine Verformung des Werkstücks vermieden wird, sowie ferner eine effektive vollautomatische, zumindest semiautomatische, Bestückung der Werkstückhaltevorrichtung ermöglicht wird, ohne jedoch Einbußen bei einer Positionierungsgenauigkeit der Werkstückhaltevorrichtung hinnehmen zu müssen.

Diese Aufgabe wird erfindungsgemäß dadurch gelöst, dass mittels der Arretiereinrichtung durch eine Bewegung eines Arretierelements der Arretiereinrichtung aus einer Freigabestellung in eine Arretierstellung die erste Werkstückhalterung und/oder das erste Klemmstück aus einer von der vorbestimmten Drehposition unterschiedlichen Drehposition in die vorbestimmte Drehposition bewegbar ist bzw. sind.

Besonders bevorzugt ist, dass das erste Klemmstück und/oder das zweite Klemmstück mehrteilig aufgebaut ist bzw. sind, wobei ein erstes Klemmstückteil des jeweiligen Klemmstücks derartig relativ zu dem zweiten Klemmstückteil des Klemmstücks bewegbar ist, dass ein erster Winkel zwischen der ersten Achse und der Normalenrichtung der ersten Klemmfläche und/oder ein zweiter Winkel zwischen der ersten Achse und der Normalenrichtung der zweiten Klemmfläche veränderbar ist.

Dabei ist besonders bevorzugt, dass das erste Klemmstück und/oder das zweite Klemmstück zweiteilig aufgebaut ist bzw. sind, die Stützspindel in zumindest einem ersten Gehäuse gelagert ist und/oder die Stützspindel und/oder das erste Gehäuse, vorzugsweise mittels zumindest einer Antriebseinrichtung, in koaxialer Richtung der ersten Achse und/oder der Antriebsspindel verschiebbar, vorzugsweise hin- und herbewegbar, gelagert ist und/oder die Antriebsspindel in zumindest einem zweiten Gehäuse gelagert ist und/oder die Antriebsspindel zumindest eine, insbesondere um die erste Achse, winkelschaltbare Winkelschalteinrichtung umfasst.

Weiterhin wird bei der vorgenannten Ausführungsform vorgeschlagen, dass das erste Gehäuse und das zweite Gehäuse an zumindest einer Tragstruktur, wie einem Maschinengestell, gelagert sind.

Eine erfindungsgemäße Werkstückhaltevorrichtung kann auch dadurch gekennzeichnet sein, dass die Winkelschalteinrichtung und/oder die Antriebseinrichtung zumindest einen motorischen, elektromotorischen, hydraulischen und/oder pneumatischen Aktuator umfasst.

Die Erfindung schlägt auch vor, dass die durch die erste Werkstückhalterung und die zweite Werkstückhalterung aufgebaute Klemmkraft im wesentlichen ausschließlich kraftschlüssig wirkt.

Weiterhin ist bevorzugt, dass die erste Klemmfläche und/oder die zweite Klemmfläche auf der dem ersten Klemmstückteil abgewandten Oberfläche des zweiten Klemmstückteils angeordnet ist bzw. sind und/oder im Bereich der ersten Klemmfläche und/oder im Bereich der zweiten Klemmfläche eine einen Reibungswiderstand erhöhende Struktur, wie eine Riffelung und/oder einen Belag vorhanden ist.

Besonders bevorzugt ist, dass das erste Klemmstückteil und das zweite Klemmstückteil über zumindest ein Gelenklager, vorzugsweise verliersicher und/oder drehmitnahmesicher, miteinander verbunden sind.

Weiterhin kann eine erfindungsgemäße Werkstückhaltevorrichtung dadurch gekennzeichnet sein, dass das erste Klemmstückteil im Bereich zumindest einer ersten Kontaktfläche mit zumindest einer zweiten Kontaktfläche des zweiten Klemmstückteils in Kontakt steht, wobei die erste Achse durch einen Schwerpunkt der ersten Kontaktfläche, insbesondere einer Projektion der ersten Kontaktfläche in eine Ebene senkrecht zu der ersten Achse, und/oder einen Schwerpunkt der zweiten Kontaktfläche, insbesondere einer Projektion der zweiten Kontaktfläche in eine Ebene senkrecht zu der ersten Achse, verläuft.

Bei der vorgenannten Ausführungsform ist besonders bevorzugt, dass die erste Kontaktfläche kleiner als eine dem zweiten Klemmstückteil zugewandte erste Oberfläche des ersten Klemmstückteils und/oder die zweite Kontaktfläche kleiner als eine dem ersten Klemmstückteil zugewandte zweite Oberfläche des zweiten Klemmstückteils ist bzw. sind, wobei vorzugsweise die Fläche der ersten Oberfläche mehr als 125% der Fläche der ersten Kontaktfläche beträgt und/oder die Fläche der zweiten Oberfläche mehr als 125% der Fläche der zweiten Kontaktfläche beträgt, und/oder die erste Kontaktfläche zumindest bereichsweise von der ersten Oberfläche vorsteht und/oder die zweite Kontaktfläche zumindest bereichsweise von der zweiten Oberfläche vorsteht.

Die beiden vorgenannten Ausführungsformen können auch dadurch gekennzeichnet sein, dass die erste Kontaktfläche und/oder die zweite Kontaktfläche zumindest bereichsweise senkrecht zu der ersten Achse verläuft, zumindest bereichsweise in einer durch die erste Achse und eine Senkrechte zu der ersten Achse aufgespannten Ebene eine gewölbte Kontur aufweist und/oder geneigt verläuft.

Weiterhin wird für die vorgenannten Ausführungsformen vorgeschlagen, dass die erste Kontaktfläche und/oder die zweite Kontaktfläche in einer Ebene senkrecht zu der ersten Achse eine quadratische, kreisförmige, elliptische und/oder rechteckförmige Umfangsform aufweist bzw. aufweisen.

Besonders bevorzugt bei den vorgenannten Ausführungsformen ist, dass das Gelenklager zumindest ein das erste Klemmstückteil und das zweite Klemmstückteil zumindest bereichsweise durchdringendes Befestigungselement, wie zumindest einen Befestigungsbolzen, zumindest eine Befestigungsschraube und/oder zumindest einen Sicherungsbolzen umfasst.

Bei der vorgenannten Ausführungsform wird vorgeschlagen, dass eine Mehrzahl von Befestigungselementen vorgesehen ist, das Befestigungselement zumindest bereichsweise in die Antriebsspindel oder die Stützspindel hineinragt, insbesondere mittels zumindest einer Verbindungseinrichtung mit der Antriebsspindel oder der Stützspindel verbunden ist, und/oder das zweite Klemmstückteil relativ zu dem Befestigungselement bewegbar ist, insbesondere mit Spiel auf dem Befestigungselement gelagert ist.

Dabei ist besonders bevorzugt, dass die Verbindungseinrichtung zumindest eine Schraubverbindung, zumindest eine Rastverbindung, zumindest eine Klipsverbindung und/oder zumindest eine Adhäsionsverbindung umfasst.

Eine erfindungsgemäße Werkstückhaltevorrichtung kann auch gekennzeichnet sein, durch zumindest eine zumindest bereichsweise zwischen dem ersten Klemmstückteil und dem zweiten Klemmstückteil angeordnete Rückstelleinrichtung.

Bei der vorgenannten Ausführungsform ist besonders bevorzugt, dass die Rückstelleinrichtung zumindest eine vorzugsweise eine mechanische, hydraulische und/oder pneumatische Federeinrichtung umfasst.

Weiterhin wird mit der Erfindung vorgeschlagen, dass die Federeinrichtung zumindest einen zumindest bereichsweise in dem ersten Klemmstückteil gelagerten und an dem zweiten Klemmstückteil, vorzugsweise der zweiten Kontaktfläche und/oder der zweiten Oberfläche anliegenden, und/oder zumindest einen zumindest bereichsweise in dem zweiten Klemmstückteil gelagerten und an dem ersten Klemmstückteil, vorzugsweise der ersten Kontaktfläche und/oder der ersten Oberfläche anliegenden, Lagerstift umfasst, wobei vorzugsweise über den Lagerstift auf das zweite Klemmstückteil mittels zumindest eines auf einer dem zweiten Klemmstückteil abgewandten Seite des in dem ersten Klemmstückteil gelagerten Lagerstifts angeordnetes Rückstellelement und/oder über den Lagerstift auf das erste Klemmstückteil mittels zumindest eines auf einer dem ersten Klemmstückteil abgewandten Seite des in dem zweiten Klemmstückteil gelagerten Lagerstifts angeordnetes Rückstellelement eine Rückstellkraft ausübbar ist.

Hierbei ist besonders bevorzugt, dass das Rückstellelement zumindest ein mechanisches Federelement, zumindest ein zumindest ein kompressibles oder inkompressibles Fluid umfassendes Fluidfederelement, vorzugsweise ein hydraulisches oder pneumatische Federelement, umfasst.

Weiterhin schlägt die Erfindung vor, dass das Fluidfederelement zumindest bereichsweise durch zumindest einen auf der dem zweiten Klemmstückteil abgewandten Seite des in dem ersten Klemmstückteil gelagerten Lagerstifts angeordneten oder durch zumindest einen auf der dem ersten Klemmstückteil abgewandten Seite des in dem ersten Klemmstückteil gelagerten Lagerstifts angeordneten, mit dem Fluid gefüllten Freiraum gebildet ist, wobei vorzugsweise eine Mehrzahl von Lagerstiften und Fluidfederelemente vorgesehen ist und zumindest zwei Freiräume, vorzugsweise alle Freiräume, mittels zumindest eines, insbesondere zumindest bereichsweise in dem ersten Klemmstückteil und/oder dem zweiten Klemmstückteil ausgebildeten Fluidkanals miteinander verbunden sind.

Ferner wird für die Erfindung vorgeschlagen, dass der Druck des Fluids in dem Freiraum und/oder in dem Kanal mittels zumindest eines Fluidanschlusses einstellbar ist.

Eine erfindungsgemäße Werkstückhaltevorrichtung kann auch dadurch gekennzeichnet sein, dass das erste Klemmstück, das zweite Klemmstück, das erste Klemmstückteil und/oder das zweite Klemmstückteil auf einer dem Werkstück zugewandten Seite zumindest eine Erhebung, wie eine Stufe, umfasst, wobei vorzugsweise das Werkstück zumindest bereichsweise mittels der Erhebung formschlüssig haltbar ist, insbesondere das Werkstück zumindest bereichsweise an der Erhebung anliegt.

Alternativ oder ergänzend zur mehrteiligen Ausbildung des ersten und/oder zweiten Klemmstücks durch Klemmstückteile kann vorgesehen sein, dass das erste Klemmstück, das zweite Klemmstück, das erste Klemmstückteil und/oder das zweite Klemmstückteil mehrteilig, vorzugsweise zweiteilig, aufgebaut ist bzw. sind, wobei zumindest ein erstes Klemmstückelement des jeweiligen Klemmstücks und/oder Klemmstückteils relativ zu zumindest einem zweiten Klemmstückelement des betroffenen Klemmstücks und/oder Klemmstückteils in eine Verschiebungsrichtung, insbesondere eine radiale Richtung der ersten Achse, bewegbar ist.

Bei der vorgenannten Ausführungsform ist insbesondere bevorzugt, dass zumindest eine Führungseinrichtung vorgesehen ist, mittels der das erste Klemmstückelement und das zweite Klemmstückelement entlang der Verschiebungsrichtung relativ zueinander geführt sind, vorzugsweise umfassend zumindest ein Bewegungsgewinde, zumindest eine Verzahnung, zumindest eine Nut-Federverbindung und/oder zumindest eine Schwalbenschwanzführung.

Auch wird in den beiden zuvor genannten Fällen vorgeschlagen, dass die Bewegung entlang der Verschiebungsrichtung mittels zumindest einer Verschiebungseinrichtung einstellbar, steuerbar und/oder regelbar ist, vorzugsweise die Verschiebungseinrichtung zumindest eine Rändelschraube, zumindest ein Bewegungsgewinde und/oder zumindest einen elektrischen, pneumatischen, hydraulischen und/oder mechanischen Verschiebungsaktuator umfasst.

Ferner kann eine erfindungsgemäße Werkstückhaltevorrichtung ergänzend oder alternativ zur mehrteiligen Ausbildung des ersten und/oder zweiten Klemmstücks durch Klemmstückteile dadurch gekennzeichnet sein, dass das Werkstück zumindest ein Mehrfachspannelement umfasst, wobei zumindest ein Einzelwerkstück, vorzugsweise eine Mehrzahl von Einzelwerkstücken, mittels zumindest einer Befestigungseinrichtung mit dem Mehrfachspannelement verbindbar ist.

Bei der vorgenannten Ausführungsform ist insbesondere bevorzugt, dass das Einzelwerkstück mittels der Befestigungseinrichtung kraft- und/oder formschlüssig mit dem Mehrfachspannelement verbindbar ist und/oder eine Mehrzahl von Befestigungseinrichtungen entlang der ersten Ache und/oder entlang einer Oberfläche des Mehrfachspannelements um einen Umfang um die erste Achse vorhanden ist.

Auch ist bevorzugt, dass das Mehrfachspannelement an der ersten Werkstückhalterung der zweiten Werkstückhalterung, dem ersten Klemmstück, dem zweiten Klemmstück, dem ersten Klemmstückteil, dem zweiten Klemmstückteil, dem ersten Klemmstückelement und/oder dem zweiten Klemmstückelement anliegt.

In einer weiteren alternativen Ausführungsform der Werkstückhaltevorrichtung kann zusätzlich zur mehrteiligen Ausbildung des ersten und/oder zweiten Klemmstücks durch Klemmstückteile oder alternativ hierzu die Werkstückhaltevorrichtung gekennzeichnet sein, dass mittels der Arretiereinrichtung, das erste Klemmstückteil, das zweite Klemmstückteil, das erste Klemmstückelement und/oder das zweite Klemmstückelement des ersten Klemmstücks arretierbar ist bzw. sind.

Dabei ist besonders bevorzugt, dass das Arretierelement mittels zumindest eines hydraulischen, pneumatischen, magnetischen, elektromagnetischen und/oder mechanischen Arretieraktuators, vorzugsweise gegen die Kraft zumindest eines Federelementes, in Eingriff mit der ersten Werkstückhalterung, dem ersten Klemmstück, insbesondere dem ersten Klemmstückteil, dem zweiten Klemmstückteil, dem ersten Klemmstückelement und/oder dem zweiten Klemmstückelement des ersten Klemmstücks, bringbar ist bzw. sind.

Auch wird bei den zuvor genannten Ausführungsformen vorgeschlagen, dassmittels der Arretiereinrichtung das erste Klemmstückteil, das zweite Klemmstückteil, das erste Klemmstückelement und/oder das zweite Klemmstückelement des ersten Klemmstücks aus der von der vorbestimmten Drehposition unterschiedlichen Drehposition in die vorbestimmte Drehposition bewegbar ist bzw. sind.

Ferner kann eine erfindungsgemäße Werkstückhaltevorrichtung gekennzeichnet sein durch zumindest eine Feststelleinrichtung mittels der die erste Werkstückhalterung, die zweite Werkstückhalterung, das erste Klemmstück, das zweite Klemmstück, das erste Klemmstückteil, das zweite Klemmstückteil, das erste Klemmstückelement und/oder das zweite Klemmstückelement in einer beliebigen Drehposition um die erste Achse feststellbar ist bzw. sind.

Schließlich wird für die erfindungsgemäße Werkstückhaltevorrichtung vorgeschlagen, dass die Feststelleinrichtung zumindest einen hydraulischen, pneumatischen, magnetischen, elektromagnetischen und/oder mechanischen Feststellaktuator umfasst.

Ferner liefert die Erfindung ein Verfahren zur Bestückung einer Werkstückhaltevorrichtung, insbesondere einer erfindungsgemäßen Werkstückhaltevorrichtung mit zumindest einem, insbesondere mehrseitig zu bearbeitenden Werkstück, wobei das Werkstück zwischen einer mit zumindest einer Stützspindel der Werkstückhaltevorrichtung in Wirkverbindung stehenden und um eine erste Achse drehbaren ersten Werkstückhalterung und zumindest einer mit zumindest einer Antriebsspindel der Werkstückhaltevorrichtung in Wirkverbindung stehenden und um die erste Achse drehbaren zweiten Werkstückhalterung bezüglich der ersten Achse axial, radial und durch Kraftschluss mittels einer zwischen der ersten Werkstückhalterung und der zweiten Werkstückhalterung in axialer Richtung der ersten Achse schraubstockartig aufbaubaren und auf gegenüberliegende Seiten des Werkstücks wirkenden Klemmkraft gehalten wird, wobei ferner die erste Werkstückhalterung und/oder ein erstes Klemmstück der ersten Werkstückhalterung zumindest indirekt mittels zumindest einer Arretiereinrichtung vor und/oder während des Aufbaus der Klemmkraft und/oder während und/oder nach Abbau der Klemmkraft in zumindest einer vorbestimmten Drehposition um die erste Ache arretiert wird bzw. werden, wobei mittels der Arretiereinrichtung die erste Werkstückhalterung und/oder das erste Klemmstück aus einer von der vorbestimmten Drehposition unterschiedlichen Drehposition in die vorbestimmte Drehposition bewegt wird bzw. werden.

Für das Verfahren wird ferner vorgeschlagen, dass mittels der Arretiereinrichtung ein erstes Klemmstückteil, ein zweites Klemmstückteil, ein erstes Klemmstückelement und/oder ein zweites Klemmstückelement des ersten Klemmstücks arretiert wird bzw. werden.

Dabei kann vorgesehen sein, dass mittels der Arretiereinrichtung das erste Klemmstückteil, das zweite Klemmstückteil, das erste Klemmstückelement und/oder das zweite Klemmstückelement aus der von der vorbestimmten Drehposition unterschiedlichen Drehposition in die vorbestimmte Drehposition bewegt wird bzw. werden.

Schließlich wird für das erfindungsgemäße Verfahren vorgeschlagen, dass das Werkstück automatisch, zumindest semiautomatisch, vorzugsweise mittels zumindest einer Robotoreinrichtung, zwischen der ersten Werkstückhalterung und der zweiten Werkstückhalterung positioniert wird.

Der Erfindung liegt somit die überraschende Erkenntnis zugrunde, dass durch die zweiteilige Ausführung eines Klemmstücks, insbesondere eines an der Stützspindel angeordneten Klemmstücks, wobei ein erster Klemmstückteil des Klemmstücks und ein zweiter Klemmstückteil des Klemmstücks relativ zueinander bewegbar sind, eine präzise Halterung eines Werkstücks auch in dem Fall, in dem das Werkstück Bauteiltoleranzen, beispielsweise keine planparallel zueinander ausgerichtete Spannfläche, aufweist, sichergestellt werden kann. So ist es möglich, dass durch die Relativbewegung der Klemmstückteile eine Neigung der Klemmfläche des Werkstücks ausgeglichen werden kann und so ein idealer Kraftfluss einer Klemmkraft in das Werkstück sichergestellt werden kann, insbesondere sichergestellt werden kann, dass die in das Werkstück eingeleitete Klemmkraft keine radiale Komponente bezüglich einer ersten Drehachse der Antriebsspindel aufweist.

Darüber hinaus ist es möglich, das Werkstück weiterhin ausschließlich kraftschlüssig zu befestigen, also insbesondere keine an die Form des Werkstücks angepasste Klemmstücke vorgehalten und eingesetzt werden müssen, um eine Bewegung des Werkstücks in eine radiale Richtung über eine formschlüssige Befestigung zu vermeiden.

So bietet gerade die vollflächige Anlage der gesamten Klemmfläche der Klemmstücke, insbesondere des zum Werkstück zugewandten Klemmstückteils und/oder Klemmstückelements, an dem Werkstück den Vorteil, dass auf eine formschlüssige Verbindung weitestgehend verzichtet werden und eine überwiegend, wenn nicht sogar ausschließlich, kraftschlüssig wirkende Verbindung hergestellt werden kann. Würden beispielsweise einzelne Erhebungen, die in eine axiale Richtung der ersten Achse bewegbar an dem Klemmstück zum Ausgleich einer Neigung der Werkstücksoberfläche gelagert sind und die jeweils auf der Oberfläche des Werkstücks anliegen, eingesetzt, wäre eine ausschließlich kraftschlüssige sichere Verbindung nicht realisierbar. So würde an der Oberfläche jeder der Erhebungen eine Kraftkomponente in eine radiale Richtung der ersten Achse entstehen. Damit wäre die vergleichbare Situation, wie in Figur 2 dargestellt, gegeben.

Dabei kann die Bewegung des Werkstücks in eine radiale Richtung ferner noch dadurch verhindert werden, dass auf einer Klemmfläche des Klemmstücks, insbesondere des zweiten Klemmstückteils, eine reibungswiederstanderhöhende Struktur, wie eine Riffelung, vorgesehen werden kann.

Die Klemmstückteile sind insbesondere über ein Gelenklager miteinander verbunden. Über das Gelenklager wird insbesondere eine Verliersicherung hergestellt, also eine Lösung des ersten Klemmstückteils von dem zweiten Klemmstückteil vermieden. Gleichzeitig erlaubt das Gelenklager jedoch eine Relativbewegung des ersten Klemmstückteils in Bezug auf das zweite Klemmstückteil, insbesondere um eine Neigung der Normalenrichtung der Klemmfläche des Klemmstücks relativ zu der ersten Achse zu ermöglichen.

Gleichzeitig wird durch das Gelenklager sichergestellt, dass die Klemmstückteile drehmitnahmesicher, insbesondere bei einer Drehung um die erste Achse, miteinander verbunden sind und gleichzeitig eine Bewegung des ersten Klemmstückteils in eine radiale Richtung der ersten Achse relativ zu dem zweiten Klemmstückteil bzw. umgekehrt vermieden wird.

Um eine relative Verkippung des ersten Klemmstückteil zu dem zweiten Klemmstückteil zu ermöglichen, ist vorgesehen, dass das erste Klemmstückteil das zweite Klemmstückteil nur im Bereich einer ersten Kontaktfläche des ersten Klemmstückteils bzw. einer zweiten Kontaktfläche des zweiten Klemmstückteils kontaktiert. Dabei ist die erste Kontaktfläche kleiner als die Größe der Oberfläche des ersten Klemmstückteils, die dem zweiten Klemmstückteil zugewandt ist bzw. die zweite Kontaktfläche kleiner als die Oberfläche des zweiten Klemmstückteils, die dem ersten Klemmstückteil zugewandt ist. Dies bedeutet, dass in dem Bereich außerhalb der ersten Kontaktfläche bzw. der zweiten Kontaktfläche die erste Oberfläche des ersten Klemmstückteils zumindest bereichsweise von der zweiten Oberfläche des zweiten Klemmstückteils beabstandet ist. Der so zwischen diesen Oberflächen bestehende Spalt ermöglicht die Verkippung des ersten Klemmstückteils relativ zu dem zweiten Klemmstückteil.

Die jeweiligen Kontaktflächen können verschiedene Oberflächenformen aufweisen. So ist vorstellbar, dass die Kontaktfläche im Wesentlichen plan zu einer radialen Richtung der ersten Achse verläuft. Alternativ kann diese Kontaktfläche jedoch auch gewölbt sein, um eine Verkippbewegung der Klemmstückteile relativ zueinander zu erleichtern.

Darüber hinaus kann ein Umfang der Kontaktflächen radialsymmetrisch sein, um ein gleichmäßiges Verkippen in alle Richtungen zu ermöglichen. Der Umfang der Kontaktflächen kann jedoch auch asymmetrisch sein, beispielsweise rechteckförmig, quadratisch oder elliptisch sein, um die Verkippungscharakteristik in die verschiedenen Richtungen unterschiedlich auszugestalten.

Das Gelenklager ist vorzugsweise durch eine Mehrzahl von Befestigungselementen ausgebildet. So kann das Gelenklager beispielsweise eine Befestigungsschraube umfassen, die das erste Klemmstückteil und das zweite Klemmstückteil im Wesentlichen vollständig durchdringt, um mittels einer Schraubverbindung in der Antriebsspindel bzw. der Stützspindel befestigt zu sein. Dabei ist ein gewisses Spiel zwischen der Befestigungsschraube, dem ersten Klemmstückteil und dem zweiten Klemmstückteil vorhanden sein, um eine relative Bewegung der Klemmstückteile zueinander zu ermöglichen.

Bevorzugt weist das Gelenklager darüber hinaus eine Mehrzahl von Sicherungsbolzen auf, die insbesondere umlaufend um die erste Achse angeordnet sind, um eine drehmitnahmesicherer Verbindung zwischen den Klemmstückteilen sicherzustellen. Gleichzeitig besteht ein gewisses Spiel zwischen den Klemmstückteilen und den Sicherungsbolzen, um eine relative Bewegung der Klemmstückteile für eine Verkippungsbewegung relativ zu der ersten Achse zu ermöglichen.

Ferner kann zwischen dem ersten Klemmstückteil und dem zweiten Klemmstückteil eine Rückstelleinrichtung vorgesehen sein. Mit dieser Rückstelleinrichtung wird sichergestellt, dass die Klemmfläche des zweiteiligen Klemmstücks in einem unbelasteten Zustand ideal planparallel zu der ersten Achse derartig ausgerichtet ist, dass eine Normalenrichtung der Klemmfläche parallel zu der ersten Achse verläuft. Dabei umfasst die Rückstelleinrichtung vorzugsweise ein Federelement mittels dem in dem ersten Klemmstückteil gelagerte Lagerstifte gegen die zweite Klemmfläche bzw. zweite Oberfläche des zweiten Klemmstückteils gezwungen werden. Vorzugsweise sind mehrere Lagerstifte vorgesehen, die umlaufend relativ zu der ersten Achse angeordnet sind, um umlaufend um die erste Achse eine gleichbleibende Rückstellkraft bereitzustellen.

Hierbei ist bevorzugt, dass als Federelemente fluidale Federelemente, insbesondere hydraulische Federelemente eingesetzt werden. Dazu sind vorzugsweise in dem ersten bzw. zweiten Klemmstückteil Kanäle ausgebildet, die Freiräume, die hinter den Lagerstiften vorhanden sind, miteinander verbinden. Diese Konstellation bewirkt insbesondere, dass die Rückstellkraft gleichmäßig über den Umfang verteilt ausgeübt wird, um eine ideale parallele Ausrichtung der Normalenrichtung der Klemmflächen zu der ersten Achse sicherzustellen.

Um darüber hinaus eine bestmögliche Positionierung bzw. Ausrichtung des Werkstücks, insbesondere von zumindest teilweise formschlüssig gehaltenen Werkstücken, zu erreichen, kann zusätzlich oder alternativ zur mehrteiligen Ausbildung der Klemmstücke durch Klemmstückteile die Ausbildung von mehreren Klemmstückelementen vorgesehen sein. Die Klemmstückelemente sind vorzugsweise in einer Verschiebungsrichtung, insbesondere eine Richtung senkrecht zu der ersten Achse, relativ zueinander bewegbar. Auf diese Weise können stufenlos verstellbare Spann- bzw. Klemmbacken bereitgestellt werden. Dies ermöglicht, dass die Klemmstückelemente, die an dem Werkstück angreifen, und damit das Werkstück selber, in die Verschiebungsrichtung, insbesondere in eine radiale Richtung bezüglich der ersten Achse, verschieben bzw. positionieren zu können. Es kann vorgesehen sein, dass eine Skala bereitgestellt wird, um eine Relativlage der Klemmstückelemente zueinander anzeigen zu können. Die Verschiebung der Klemmstückelemente relativ zueinander kann insbesondere über eine Verschiebungseinrichtung, wie ein Bewegungsgewinde oder eine Rändelschraube, erfolgen, wobei die Bewegung vorzugsweise über eine Führungseinrichtung geführt wird. Die Führungseinrichtung kann insbesondere eine Verzahnung bzw. eine Schwalbenschwanzverbindung zwischen den Klemmstückelementen umfassen.

Insbesondere bei einer automatischen oder semiautomatischen Bestückung der Werkstückhaltevorrichtung mit Werkstücken ist es alternativ oder zusätzlich zu der mehrteiligen Ausgestaltung der Klemmstücke durch Klemmstückteile vorteilhaft, wenn ein Mehrfachspannelement eingesetzt wird. Dies ermöglicht es, dass bei Einsatz mehrer Mehrfachspannelemente, wenn ein erstes Mehrfachspannelement in der Werkstückhaltevorrichtung eingespannt ist, außerhalb der Werkstückhaltevorrichtung mit mehreren Einzelwerkstücken beladen werden kann. Der Austausch der Mehrfachspannelemente in der Werkstückhaltevorrichtung kann mittels eines Roboters automatisch bzw. semiautomatisch durchgeführt werden, so dass Rüstzeiten minimiert werden. Entsprechende Mehrfachspannelemente können entweder direkt zwischen den Werkstückhalterungen bzw. zwischen, insbesondere mehrteilig ausgebildeten Klemmstücken, eingespannt werden. Hierbei ist es besonders bevorzugt, dass das Mehrfachspannelement zumindest teilweise formschlüssig in der Werkstückhalterung bzw. den Klemmstücken bzw. Klemmstückteilen oder Klemmstückelementen eingespannt wird. Zur Bestückung der Werkstückhaltevorrichtung wird das Mehrfachspannelement bzw. die Spannbrücke zwischen der Stützspindel und der Antriebsspindel positioniert.

Für eine automatische bzw. semiautomatische Bestückung der Werkstückhaltevorrichtung ist es ferner bevorzugt, dass bei jedem Beladezyklus die Antriebsspindel und/oder die Stützspindel in einer vorbestimmten (Dreh-)Position angeordnet ist. Insbesondere in dem Fall, in dem das Werkstück, insbesondere das Mehrfachspannelement, zumindest teilweise formschlüssig mit der Antriebs- bzw. Stützspindel verbunden wird, ist diese vorbestimmte Position, insbesondere Drehposition, um die erste Achse wichtig für eine komplikationslose Beschickung.

Um diese Ausrichtung zu erreichen, kann die Werkstückhaltevorrichtung alternativ oder zusätzlich zu der mehrteiligen Ausbildung der Klemmstücke durch die Klemmstückteile eine Arretiereinrichtung umfassen. Mittels dieser Arretiereinrichtung wird zumindest ein mit dem Werkstückbereich der Antriebsspindel oder Stützspindel mitdrehendes Element in eine vorbestimmte Drehposition um die erste Achse gezwungen. Insbesondere wird bei einer Bewegung eines Arretierelements aus einer Freigabestellung in eine Arretierstellung das sich mitdrehende Element in die vorbestimmte Drehposition gezwungen und in dieser gehalten. Das Halten des Elements mittels der Arretiereinrichtung kann ferner durch eine Feststelleinrichtung unterstützt werden, wobei mittels der Feststelleinrichtung vorzugsweise das Element in jeder Drehposition verstellbar ist, während mittels der Arretiereinrichtung das Element in zumindest einer vorbestimmten Drehposition festgelegt wird.

Durch Einsatz der Arretiereinrichtung, insbesondere in Kombination mit der Feststelleinrichtung, kann dann sichergestellt werden, dass die erste Werkstückhalterung, die zweite Werkstückhalterung, das erste Klemmstück, das zweite Klemmstück, das erste Klemmstückteil, das zweite Klemmstückteil, das erste Klemmstückelement und/oder das zweite Klemmstückelement sich in einer vorbestimmten Drehposition befindet, wenn das Werkstück aus der Werkstückhaltevorrichtung entnommen bzw. ein neues Werkstück in die Werkstückhaltevorrichtung eingespannt wird.

Weitere Merkmale und Vorteile der Erfindung ergeben sich aus der nachfolgenden Beschreibung, in der bevorzugte Ausführungsformen der Erfindung anhand von schematischen Zeichnungen erläutert sind.

Dabei zeigt:
- Figur 1: eine schematische Aufsicht auf eine Werkstückhaltevorrichtung gemäß dem Stand der Technik;
- Figur 2: eine schematische Aufsicht auf die Werkstückhaltevorrichtung der Figur 1 mit einem anderen eingespannten Werkstück;
- Figur 3: eine schematische Aufsicht auf eine Werkstückhaltevorrichtung gemäß der Erfindung;
- Figur 4a: eine Aufsicht auf ein erstes Klemmstückteil der Werkstückhaltevorrichtung mit der Figur 3 aus Richtung A;
- Figur 4b: eine Aufsicht auf den Werkstückhaltebereich der Werkstückhaltevorrichtung der Figur 3 aus Richtung B in Figur 3;
- Figur 5a: eine Aufsicht gemäß der Figur 4a auf eine alternative Ausführungsform eines ersten Klemmstückteils;
- Figur 5b: eine Aufsicht gemäß der Figur 4b auf einen Werkstückhaltebereich der Werkstückhaltevorrichtung der Figur 3 unter Einsatz des in Figur 5a dargestellten ersten Klemmstückteils;
- Figur 6a: eine Aufsicht gemäß den Figuren 4a und 5a auf eine weitere alternative Ausführungsform eines ersten Klemmstückteils;
- Figur 6b: eine Aufsicht auf den Werkstückhaltebereich gemäß den Figuren 4b und 5b unter Einsatz des in der Figur 6a dargestellten ersten Klemmstückteils;
- Figur 7a: eine Aufsicht gemäß den Figuren 4a, 5a, 6a auf eine weitere alternative Ausführungsform eines ersten Klemmstückteils;
- Figur 7b: eine Aufsicht gemäß den Figuren 4b, 5b, 6b auf einen Werkstückhaltebereich unter Einsatz des in Figur 7a dargestellten ersten Klemmstückteils;
- Figur 8: eine perspektivische Aufsicht auf ein Werkstückhaltebereich einer erfindungsgemäßen Werkstückhaltevorrichtung bei einer exzentrischen Einspannung eines Werkstücks;
- Figur 9a: eine perspektivische Aufsicht eine Werkstückhaltevorrichtung bei Einspannung zweier Werkstücke;
- Figur 9b: eine Aufsicht auf die Werkstückhaltevorrichtung der Figur 9a aus Richtung C;
- Figur 10: eine Aufsicht auf eine Werkstückhaltevorrichtung bei zentrischer Einspannung eines Werkstücks;
- Figur 11a: eine Aufsicht entlang der Achse R auf eine erste Ausführungsform eines zweiten Klemmstückteils;
- Figur 11b: eine Querschnittsansicht des zweiten Klemmstückteils der Figur 11a aus Richtung C;
- Figur 12a: eine Aufsicht gemäß der Figur 11a auf eine alternative Ausführungsform eines zweiten Klemmstückteils;
- Figur 12b: eine Querschnittsansicht des zweiten Klemmstückteils der Figur 12a aus Richtung D;
- Figur 13a: eine Ansicht gemäß den Figuren 11a und 12a auf ein zweites Klemmstückteil mit einer Rückstelleinrichtung;
- Figur 13b: eine Querschnittsansicht des zweiten Klemmstückteils der Figur 13a aus Richtung E;
- Figur 14a: eine Aufsicht auf eine alternative Ausführungsform eines ersten Klemmstückteils mit einer Rückstelleinrichtung entlang der Achse R; und
- Figur 14b: eine Querschnittsansicht des ersten Klemmstückteils der Figur 14a aus Richtung F;
- Figur 15a: eine schematische seitliche Ansicht auf eine Werkstückhaltevorrichtung, bei der die Klemmstücke relativ zueinander bewegbare Klemmstückelemente umfassen;
- Figur 15b: eine Aufsicht auf die Werkstückhaltevorrichtung der Figur 15a aus Richtung F;
- Figur 16a: eine perspektivische Seitenansicht auf eine Werkstückhaltevorrichtung, in die erfindungsgemäß ein Mehrspannelement eingespannt ist;
- Figur 16b: eine Aufsicht auf die Werkstückhaltevorrichtung mit der Figur 16a aus Richtung G;
- Figur 17a: eine schematische seitliche Ansicht auf eine Werkstückhaltevorrichtung in die ein Mehrfachspannelement gemäß einer zweiten Ausführungsform eingespannt ist;
- Figur 17b: eine schematische Aufsicht auf die Werkstückhaltevorrichtung der Figur 17a aus Richtung H;
- Figur 18a: eine schematische Querschnittsansicht einer in einer erfindungsgemäßen Werkstückhaltevorrichtung einsetzbaren Stützspindel in einer ersten Position;
- Figur 18b: eine Ansicht auf die Stützspindel der Figur 18a in einer zweiten Position;
- Figur 18c: eine Aufsicht auf die Stützspindel der Figuren 18a und 18b in einer dritten Position; und
- Figur 18d: eine Aufsicht auf die Stützspindel der Figuren 18a bis 18c, in einer vierten Position.

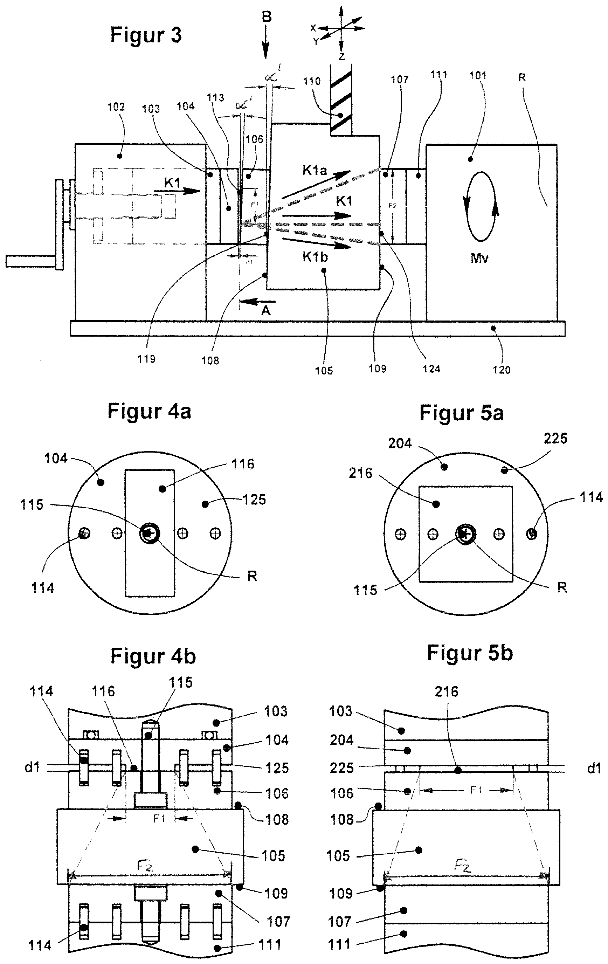

Die in Figur 3 dargestellte Werkstückhaltevorrichtung weist ein Gehäuse 101, ein Gehäuse 102, in der die Stützspindel 103 gelagert ist, auf. Mit der Stützspindel 103 ist ein erstes Klemmstückteil 104 zur Halterung eines Werkstücks 105 verbunden. Das mit der Stützspindel 103 verbundene Klemmstück ist zweitteilig aufgebaut und umfasst neben dem ersten Klemmstückteil 104 ein zweites Klemmstückteil 106.

Auf der der Stützspindel 103 abgewandten Seite des Werkstücks 105 ist das Werkstück 105 in Kontakt mit einem zweiten Klemmstück 107. Dabei liegt das erste Klemmstück 106 mit einer Klemmfläche 119 an einer Spannfläche 108 des Werkstücks 105 an, während das zweite Klemmstück 107 über eine Klemmfläche 124 an einer Spannfläche 109 des Werkstücks 105 anliegt.

Das Werkstück 105 ist mittels eines Fräsers 110 bearbeitbar, wobei das Werkstück 105 über eine mit dem Klemmstück 107 verbundene Antriebsspindel 111 um eine erste Achse R drehbar ist. Die Gehäuse 101, 102 sind an einem Maschinengestell 120 gelagert.

Ähnlich dem Werkstück 5' weist das Werkstück 105 nicht ideal planparallele Spannflächen 108, 109 auf. Insbesondere ist die Spannfläche 108 zu einer Radialen Richtung der ersten Achse R um einen Winkel α' geneigt.

Diese Neigung wird jedoch durch eine relative Verkippung des zweiten Klemmstückteils 106 zu dem ersten Klemmstückteil 104 um einen gleichen Winkel α' ausgeglichen. Diese Verkippung wird insbesondere dadurch ermöglicht, dass das erste Klemmstückteil 104 und das zweite Klemmstück 106 bereichsweise einen Abstand d1 voneinander aufweisen.

Die Entstehung des Abstands d1 wird insbesondere aus den Figuren 4a und 4b ersichtlich. In Figur 4a ist eine Aufsicht auf das erste Klemmstück 104 aus Richtung A in Figur 3 dargestellt. Das erste Klemmstückteil 104 weist eine erste Oberfläche 125 auf.

Aus der Oberfläche 125 steht die erste Kontaktfläche 116 hervor. Dabei ist die Kontaktfläche 116 so auf dem ersten Klemmstückteil 104 angeordnet, dass die erste Achse R durch einen Schwerpunkt der Kontaktfläche 116 verläuft. Unter dem Schwerpunkt einer Fläche wird der Schnittpunkt der Lotgeraden, die von den jeweiligen Eckpunkte der Flächen ausgehen, verstanden. Diese Lotgeraden stellen die sogenannte Schwerelinie dar und der Schnittpunkt zweier bzw. aller Schwerelinien stellen den Schwerpunkt der Fläche dar.

Wie insbesondere der Figur 4b zu entnehmen ist, kontaktiert das erste Klemmstückteil 104 das zweite Klemmstückteil 106 im Bereich der ersten Kontaktfläche 116. Die Oberfläche 125 außerhalb der ersten Kontaktfläche 116 ist jedoch von dem zweiten Klemmstückteil 106 durch den Abstand d1 beabstandet.

Durch die durch den Abstand d1 ermöglichte Verkippung des ersten Klemmstückteils 104 relativ zu dem zweiten Klemmstückteil 106 ergibt sich, dass die Klemmkraft K1 sich, wie in Figur 3 dargestellt, derartig in Klemmkraftkomponenten K1a und K1b aufteilt, dass sich die radialen Komponenten der Klemmkraftkomponenten K1a und K1b aufheben, so dass ausschließlich eine in axialer Richtung der Achse R verlaufende Klemmkraft K1 auf das Werkstück 105 wirkt.

Um eine bestmögliche Verkippung der Klemmstückteile 104 und 106 sowie eine solche Einleitung der Klemmkraft in das Werkstück zu erreichen, ist eine Fläche F1, also die Größe der Kontaktfläche 116 so dimensioniert, dass die Größe der Fläche F2, also die Fläche an der das Werkstück die Klemmfläche des Klemmstücks 107 im Bereich der Spannfläche 109 berührt, mindestens ¼ größer als die Fläche F1 ist.

Das erste Klemmstückteil 104 und das zweite Klemmstückteil 106 sind über ein Gelenklager miteinander verbunden. Das Gelenklager umfasst die Befestigungsschraube 115 und Sicherungsstifte 114. Die Befestigungsschraube 115 durchdringt vollständig das zweite Klemmteil 106 und das erste Klemmteil 104 und ist mittels einer Schraubverbindung in der Stützspindel 103 befestigt.

Die Öffnung, durch die die Befestigungsschraube 115 durch das zweite Klemmstückteil 106 hindurchragt, ist so dimensioniert, dass das zweite Klemmstückteil 106 schwimmend gelagert ist, insbesondere also eine Verkippung des zweiten Klemmstückteils 106 relativ zu dem ersten Klemmstückteil 104 ermöglicht wird. In ähnlicher Weise ist ein Spiel zwischen dem ersten Klemmstückteil 104 und den Sicherungsstiften 114 vorhanden. Dadurch wird sichergestellt, dass eine drehmitnahmesichere Verbindung zwischen den Klemmstückteilen 104 und 106 besteht und andererseits die Verkippung der Klemmstückteile zueinander ermöglicht wird.

In den Figuren 5a und 5b ist eine alternative Ausführungsform eines ersten Klemmstückteils 204 dargestellt. Die Elemente des ersten Klemmstückteils 204, die funktional denjenigen des ersten Klemmstückteils 104 entsprechen, tragen die gleichen Bezugszeichen, allerdings um 100 erhöht.

Wie sich aus einem Vergleich der Figuren 4a und 5a ergibt, unterscheiden sich die ersten Klemmstückteile 104 und 204 insbesondere dadurch, dass die Kontaktflächen 116 und 216, unterschiedliche Umfangsformen aufweisen. So weist die Kontaktfläche 116 eine rechteckige Umfangsform auf, während die Kontaktfläche 216 eine quadratische Umfangsform aufweist.

Hieraus ergibt sich, dass bei dem ersten Klemmstückteil 104 eine Verkippung des Klemmstückteils 106 relativ zu dem Klemmstückteil 104 in einer Ebene, in der auch die Sicherungsstifte 114 liegen, im Vergleich zu einer dazu senrechten Richtung erleichtert ist.

Bei dem ersten Klemmstückteil 204 hingegen unterscheidet sich die Verkippungscharakteristik in die radialen Richtungen entlang der Sicherungsstifte 114 nicht vor in einer Verkippung in einer Richtung senkrecht dazu.

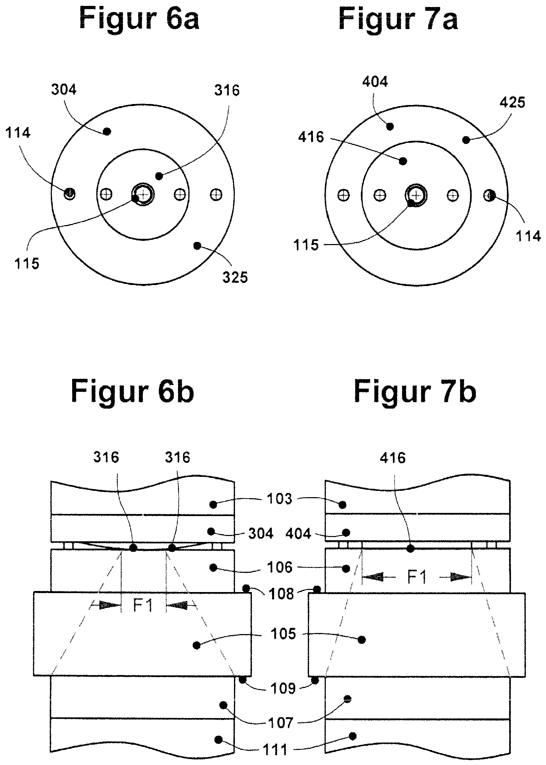

In Figur 6a ist eine dritte Ausführungsform eines ersten Klemmstückteils 304 dargestellt. Diejenigen Elemente des Klemmstückteils 304, die funktional denjenigen des Klemmstückteils 104 entsprechen, tragen die gleichen Bezugszeichen, allerdings um den Faktor 200 erhöht.

Das erste Klemmstückteil 304 unterscheidet sich, wie sich insbesondere auch aus der Figur 6b ergibt, dadurch von den Klemmstückteilen 104 und 204, dass nicht nur die Umfangsform der ersten Kontaktfläche 316 rotationssymmetrisch ist. Darüber hinaus weist die Kontaktfläche 316 eine gewölbte Oberflächenkontur auf. Dies bewirkt insbesondere, dass die Auflagefläche F1, wie in Figur 6b dargestellt, kleiner als die Auflagefläche F1, wie sie in Figur 5b für das erste Klemmstückteil 204 dargestellt ist, ist. Damit wird eine Verkippung des ersten Klemmstückteils 304 zu dem zweiten Klemmstückteil 106 zusätzlich erleichtert.

In Figur 7a ist schließlich eine vierte Ausführungsform eines ersten Klemmstückteils 404 dargestellt. Die Elemente des ersten Klemmstückteils 404, die denjenigen des ersten Klemmstückteils 104 entsprechen, tragen die gleichen Bezugszeichen, allerdings um den Faktor 300 erhöht.

Das erste Klemmstück 404 weist ebenfalls eine erste Kontaktfläche 416 auf, die einen radialsymmetrischen Umfang aufweist. Jedoch ist die Kontur der ersten Kontaktfläche 416 eben im Gegensatz zu der Kontaktfläche 316. Hieraus ergibt sich eine vergrößerte Auflagefläche F1, wie in Figur 7 dargestellt, so dass eine Verkippung zwischen dem ersten Klemmstückteil 404 und dem zweiten Klemmstückteil 106 im Vergleich zu dem Klemmstückteil 304 erschwert ist.

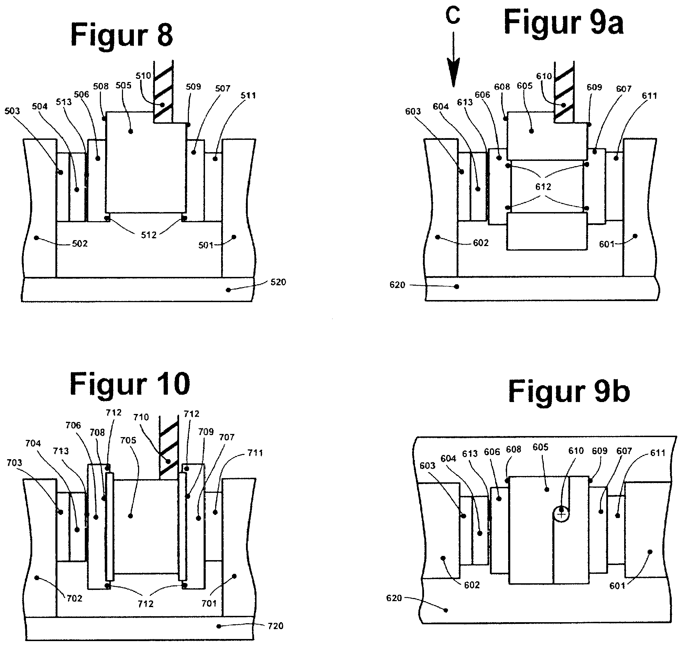

In Figur 8 ist eine weitere Ausführungsform einer erfindungsgemäßen Werkstückhaltevorrichtung dargestellt. Die Elemente, der Werkstückhaltevorrichtung in Figur 8, die funktional denjenigen der in Figur 3 dargestellten Werkstückhaltevorrichtung entsprechen, tragen die gleichen Bezugszeichen, allerdings um den Faktor 400 erhöht.

Wie insbesondere Figur 8 zu entnehmen ist, sind die Klemmstücke 507 und 504, 506 abweichend zu den Klemmstücken 107, 104 und 106 ausgebildet. Insbesondere weisen das zweite Klemmstückteil 506 und das zweite Klemmstück 507 Stufen 512 auf. Dies ermöglicht es, dass das Werkstück 505 exzentrisch zu der ersten Achse R durch eine kraftschlüssige und formschlüssige Befestigung gehalten ist.

In den Figuren 9a und 9b ist eine weitere Ausführungsform einer erfindungsgemäßen Werkstückhaltevorrichtung dargestellt. Die Elemente der Werkstückhaltevorrichtung der Figuren 9a und 9b, die denjenigen der Werkstückhaltevorrichtung der Figur 8 entsprechen, tragen die gleichen Bezugszeichen, allerdings um den Faktor 100 erhöht.

Im Gegensatz zu der in Figur 3 dargestellten Werkstückhaltevorrichtung ermöglicht die in Figur 9a und 9b dargestellte Werkstückhaltevorrichtung die Halterung von mehreren Werkstücken 605. Dazu sind die Klemmstücke 607 und 606 abgeändert ausgeführt. So sind entsprechende Stufen 612 in dem zweiten Klemmstückteil 606 und dem zweiten Klemmstückteil 607 ausgebildet.

Figur 10 zeigt eine weitere Ausführungsform einer erfindungsgemäßen Werkstückhaltevorrichtung. Diejenigen Elemente der in Figur 10 dargestellten Werkstückhaltevorrichtung, die denjenigen der in Figur 8 dargestellten Werkstückhaltevorrichtung entsprechen, tragen die gleichen Bezugszeichen, allerdings um den Faktor 200 erhöht.

Im Gegensatz zu dem zweiten Klemmstückteil 106 weist das erste Klemmstückteil 706, Stufen 712 auf, die es ermöglichen, dass das Werkstück 705 sowohl kraft- als auch formschlüssig in der Werkstückhaltevorrichtung gehalten wird. Zu diesem Zweck weist auch das zweite Klemmstück 707 entsprechende Stufen 712 auf.

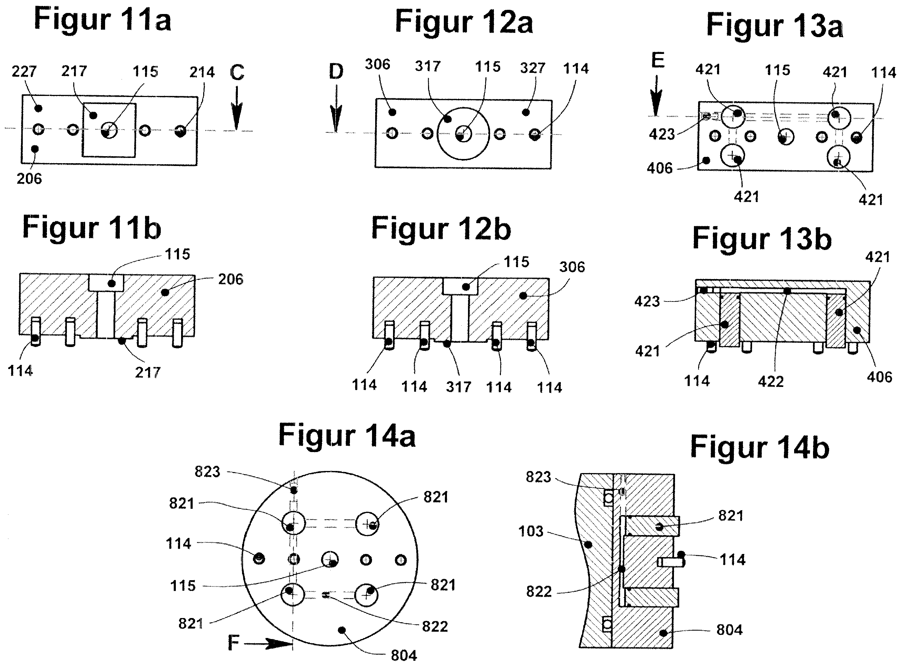

In Figur 11a ist eine weitere Ausführungsform eines zweiten Klemmstückteils 206 für die in Figur 3 dargestellte Werkstückhaltevorrichtung dargestellt. Das zweite Klemmstückteil 206 weist eine ebene Oberfläche auf. Um eine Verkippung zwischen dem ersten Klemmstückteil und dem zweiten Klemmstückteil weiter zu vereinfachen, ist vorgesehen, dass nicht nur das erste Klemmstückteil eine erhöhte Kontaktfläche aufweist, sondern zusätzlich oder alternativ das zweite Klemmstückteil 206 eine im Vergleich zu einer Oberfläche 227 erhöhte Kontaktfläche 217 aufweist. In den Figuren 11a und 11b dargestellten Beispielen, ist die Kontaktfläche 217 jeweils rechteckig ausgebildet.

In Figur 12a ist eine alternative Ausführungsform eines weiteren zweiten Klemmstückteils 306 mit einer erhöhten Kontaktfläche 317 dargestellt. Diejenigen Elemente des Klemmstückteils 306, die denjenigen des zweiten Klemmstückteils 206 entsprechen, tragen die gleichen Bezugszeichen, allerdings um den Faktor 100 erhöht. Das Klemmstückteil 306 weist eine Kontaktfläche 317 auf, die einen kreisrunden Umfang aufweist.

Darüber hinaus können auch weitere, alternative Formen der Umfangsformen der Kontaktfläche 317 vorgesehen sein, aber auch abweichende Konturformen. So kann anstelle der ebenen Ausgestaltung der Kontaktflächen 217, 317 auch eine gewölbte Konturform verwendet werden.

Darüber hinaus ist die Zweiteilung des Klemmstück nicht auf das mit der Stützspindel verbindende Klemmstück beschränkt, sondern kann ergänzend oder alternativ auch für das mit der Antriebsspindel verbundene Klemmstück erreicht werden.

Darüber hinaus können in die Klemmstückteile jeweilige Rückstelleinrichtungen integriert sein. In den Figuren 13a und 13b ist eine weitere Ausführungsform eines zweiten Klemmstückteils 406 dargestellt. Das zweite Klemmstückteil 406 weist Öffnungen auf, in denen Lagerstifte 421 gelagert sind. Bei einem Zusammenbau der Werkstückhaltevorrichtung liegen die Lagerstifte 421 auf der Oberfläche des ersten Klemmstückteils auf. Wie insbesondere Figur 13b zu entnehmen ist, sind auf der dem ersten Klemmstückteil abgewandten Seite der Lagerstifte 421 Freiräume vorhanden, die über einen Fluidkanal 422 miteinander verbunden sind. Über einen Fluidanschluss 423 wird in den Fluidkanal 422 und die Freiräume ein Fluid eingebracht, wodurch ein Fluidfederelement ausgebildet wird. So kann beispielweise eine Flüssigkeit zur Bereitstellung eines hydraulischen Federelements eingesetzt werden oder ein Gas zur Bereitstellung eines pneumatischen Federelements.

Dadurch, dass die Freiräume miteinander über den Kanal 422 kommunizieren, führt ein Einrücken eines Lagerstifts 421 in das Klemmstückteil 406 dazu, dass die Rückstellkraft auf die jeweiligen anderen Lagerstifte 421 erhöht wird. So können andere Lagerstifte 421 aus dem zweiten Klemmstückteil 406 ausgelenkt werden, insbesondere aufgrund des durch eine Verkippung des ersten Klemmstückteils und der damit einhergehenden Zunahme eines lokalen Abstandes der Klemmstückteile. Dadurch wird erreicht, dass die entsprechende Verkippbewegung unterstützt wird.

In den Figuren 14a und 14b ist ein erstes Klemmstückteil 804 dargestellt, in welchen in analoger Weise zu dem zweiten Klemmstückteil 406 Lagerstifte 821 eingelassen sind. Freiräume hinter den Lagerstiften 821 sind ebenfalls über Kanäle 822 fluidal miteinander verbunden.

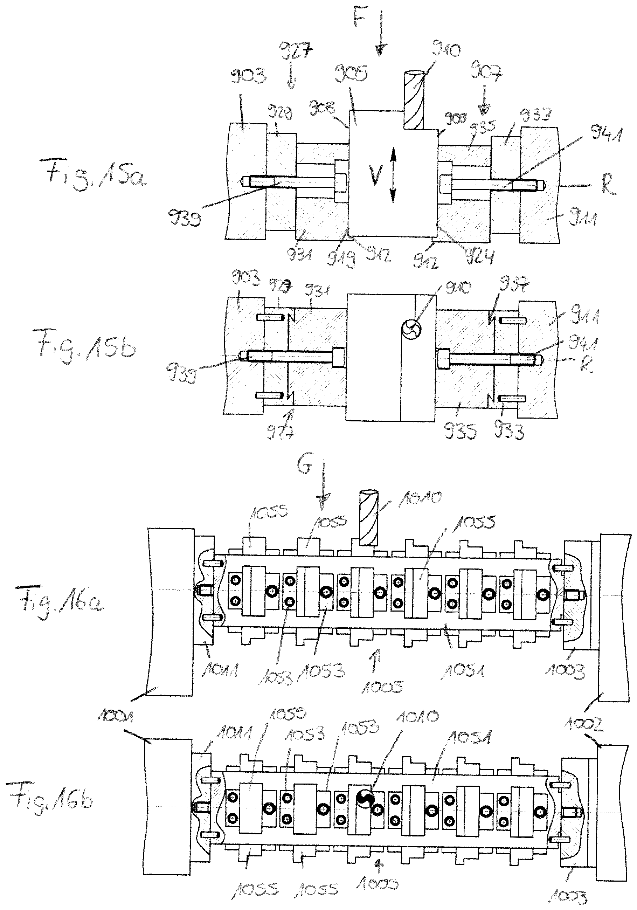

Figur 15a zeigt eine schematische seitliche Ansicht auf eine weitere Ausführungsform einer erfindungsgemäßen Werkstückhaltevorrichtung. Diejenigen Bezugszeichen der in Figur 15a dargestellten Werkstückhaltevorrichtung, die denjenigen der in Figur 3 dargestellten Werkstückhaltevorrichtung entsprechen, tragen die gleichen Bezugszeichen, allerdings um den Faktor 800 erhöht.

Die in Figur 15a dargestellte Werkstückhaltevorrichtung weist ein erstes Klemmstück 927 auf, welches ein erste Klemmstückelement 929 und ein zweite Klemmstückelement 931 umfasst. Bei dem ersten Klemmstückelement 929 kann es sich insbesondere um ein Element handeln, welches, wie in den vorangehenden Ausführungsformen ausführlich beschrieben, zumindest zwei Klemmstückteile umfassen kann. Das zweite Klemmstück 907 ist ebenfalls zweiteilig ausgebildet, insbesondere umfasst es ein Klemmstückelement 933 und ein relativ dazu in eine Verschieberichtung V, die senkrecht auf der ersten Achse R steht, bewegbares Klemmstückelement 935.

Wie Figur 15a darüber hinaus zu entnehmen ist, ist das Werkstück 905 teilweise formschlüssig aufgrund der in dem Klemmstückelement 931 und in dem Klemmstückelement 935 ausgebildeten Stufe 912 gehalten. Um eine Positionierung des Werkstücks 905 entlang der Verschiebungsrichtung V zu ermöglichen, insbesondere die Position des Werkstücks 905 relativ zu dem Fräser 910 so einzustellen, dass eine allseitige Bearbeitung des Werkstücks 905 möglich ist, sind die Klemmstückelemente 929, 931 bzw. die Klemmstückelemente 933, 935 entlang einer in Figur 15b dargestellten Führungseinrichtung 937 bewegbar. Die Führungseinrichtung 937 ist in Form eine Schwalbenschwanzführung ausgebildet.

Eine Fixierung der Klemmstückelemente 929, 931 bzw. 933, 935 relativ zueinander erfolgt mittels Befestigungsschrauben 939, 941. Zunächst werden die Befestigungsschrauben 939, 941 gelöst, so dass die Klemmstückelemente relativ zueinander in die gewünschte Position bewegt werden können. Anschließend werden die Befestigungsschrauben 939, 941 wieder festgezogen, so dass die Klemmstückelemente 929, 931 bzw. 933, 935 relativ zueinander fixiert sind. In einer nicht dargestellten Ausführungsform kann auch eine Verschiebungseinrichtung vorgesehen sein, die beispielsweise eine Rändelschraube umfasst.

In Figur 15b ist eine Aufsicht auf die Werkstückhaltevorrichtung der Figur 15a aus Richtung F in Figur 15a dargestellt.

Um eine Rüstzeit zur Bestückung der Werkstückhaltevorrichtung zu verkürzen, kann der Einsatz von Mehrfachspannelementen vorgesehen sein.

In Figuren 16a bis 17b sind Werkstückhaltevorrichtungen dargestellt, in denen solche Mehrfachspannelemente bzw. Spannbrücken eingesetzt werden.

In den Figuren 16a und 16b ist eine erste Ausführungsform einer Werkstückhaltevorrichtung dargestellt, in der eine derartige Spannbrücke eingesetzt ist. Diejenigen Elemente der Werkstückhaltevorrichtung, die denjenigen der in Figur 3 dargestellten Werkstückhaltevorrichtung entsprechen, tragen die gleichen Bezugszeichen, allerdings um den Faktor 900 erhöht. Das Werkstück 1005 wird durch ein Mehrspannelement 1051 gebildet. Das Mehrspannelement 1051 weist eine Vielzahl von Befestigungseinrichtungen 1053 auf, an denen eine Mehrzahl von Einzelwerkstücken 1055 an dem Mehrfachspannelemente 1051 befestigt werden können.

In Figur 16b ist eine Aufsicht auf die Werkstückhaltevorrichtung der Fiur 16a aus Richtung G dargestellt.

Durch Verwendung des Mehrfachspannelements 1051 wird ein Auswechseln der Mehrfachspannelemente 1051 und damit der Einzelwerkstücke 1055 unter Verringerung der Rüstzeiten erreicht. So kann ein erstes Mehrfachspannelement sich in der in den Figuren 16a und 16b dargestellten Position befinden, also die Einzelwerkstücke 1055 durch den Fräser 1010 bearbeitet werden. Gleichzeitig kann ein weiteres Mehrfachspannelement mit den Einzelwerkstücken bestückt werden und nach Abschluss der Bearbeitung der Werkstücke auf dem ersten Mehrfachspannelement mittels eine Robotersteuerung gegen das erste Mehrfachspannelement ausgewechselt werden.

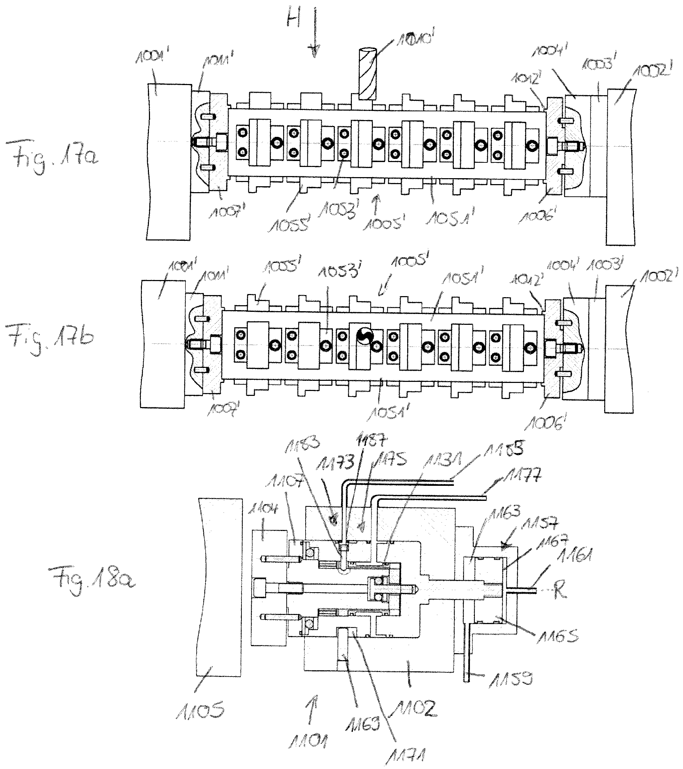

In den Figuren 17a und 17b ist eine weitere Ausführungsform eine Werkstückhaltevorrichtung dargestellt, bei welcher jedoch das Mehrfachspannelement nicht direkt an der Antriebs- bzw. Stützspindel. sondern an zweiteiligen Klemmstücken fixiert wird. Diejenigen Elemente der Werkstückhaltevorrichtung der Figuren 17a und 17b, die denjenigen der Werkstückhaltevorrichtung der Figuren 3, 16a und 16b entsprechen, tragen die gleichen Bezugszeichen, allerdings einfach gestrichen bzw. im Vergleich zur Figur 3 um den Faktor 900 erhöht.

Wie den Figuren 17a und 17b zu entnehmen ist, ist das Mehrfachspannelement 1051' nicht direkt an den Spindeln in Form der Stützspindel 1003' bzw. Antriebsspindel 1011' angeordnet, sondern unter Zwischenschaltung eines einteiligen Klemmstücks 1007' und eines zweitteiligen Klemmstücks, umfassend die Klemmstückteile 1004' und 1006'.

Wie zuvor beschrieben, erlaubt die zweitteilige Ausgestaltung des Klemmstücks einen leichteren Ausgleich von Neigungen einer Stirnfläche des Mehrfachspannelements 1051'. Um eine exakte Ausrichtung des Mehrfachspannelements 1051' relativ zu dem Fräser 1010 zu ermöglichen, ist insbesondere bevorzugt, dass ein Klemmstückteil zweiteilig durch zwei Klemmstückelemente, wie in den Figuren 15a und 15b relativ zueinander verschiebbar dargestellt sind, ausgebildet sind. So wird eine kraft- und formschlüssige Fixierung des Mehrfachspannelements 1051' in einer vorbestimmten Position mittels Stufen 1012' möglich.

In Figuren 18a bis 18d ist schließlich eine in einer erfindungsgemäßen Werkstückhaltevorrichtung einsetzbare Stützspindelanordnung dargestellt.

Mittels der Stützspindelanordnung 1101 kann eine Klemmkraft auf ein Werkstück 1105 aufgebaut werden. Dazu weist die Abstützspindelanordnung eine relativ zu einem Gehäuse 1102 um die erste Achse R drehbare Stützklemmbacke in Form eines Klemmstücks 1107 auf. Mittels einer Hydraulikkammer 1157 ist eine Bewegung der Klemmbacke 1107 in eine axiale Richtung der ersten Achse R möglich.

Dazu weist die Hydraulikkammer 1157 einen ersten Anschluss 1159 und einen zweiten Anschluss 1161 auf. Der erste Anschluss 1159 kommuniziert mit einer ersten Teilkammer 1163, die auf einer ersten Seite eines Kolbens 1165 angeordnet ist, während der Anschluss 1161 fluidal mit einer Teilkammer 1167, die auf der gegenüberliegenden Seite des Kolbens 1165 angeordnet ist, verbunden ist.

In der in Figur 18a dargestellten Position wird über die erste Leitung 1159 ein Hydraulikfluid in die Teilkammer 1163 eingespeist.

Dies bewirkt, dass die Klemmbacke 1107 sich in einer Position befindet, in der kein Kontakt mit dem Werkstück 1105 über das Klemmstückteil 1104 besteht. Die Klemmbacke 1107 stellt ferner ein weiteres Klemmstückteil dar, so dass das Klemmstück insgesamt aus den beiden Klemmstückteilen 1104 und 1107 gebildet ist. Eine Bewegung der Klemmbacke 1107 entlang der ersten Achse R wird über ein Begrenzungselement 1169, welches in eine Ausnehmung 1171 der Klemmbacke 1107 eingreift, begrenzt.

Die Stützspindelanordnung 1101 weist ferner eine Arretiereinrichtung 1173 und eine Feststelleinrichtung 1175 auf. Die Feststelleinrichtung 1175 umfasst insbesondere eine Hydraulikleitung 1177. Wird über die Leitung 1177 Hydraulikfluid unter Druck eingebracht, so wird ein Klemmschuh 1131 so gegen die Klemmbacke 1107 gedrückt, dass eine Bewegung der Klemmbacke 1107 um die Achse R blockiert wird.

Die Arretiereinrichtung 1173 umfasst ein Arretierelement 1183, welches mittels über eine Leitung 1185 eingebrachtes Hydraulikfluid gegen die Kraft eines Federelements 1187 bewegbar ist.

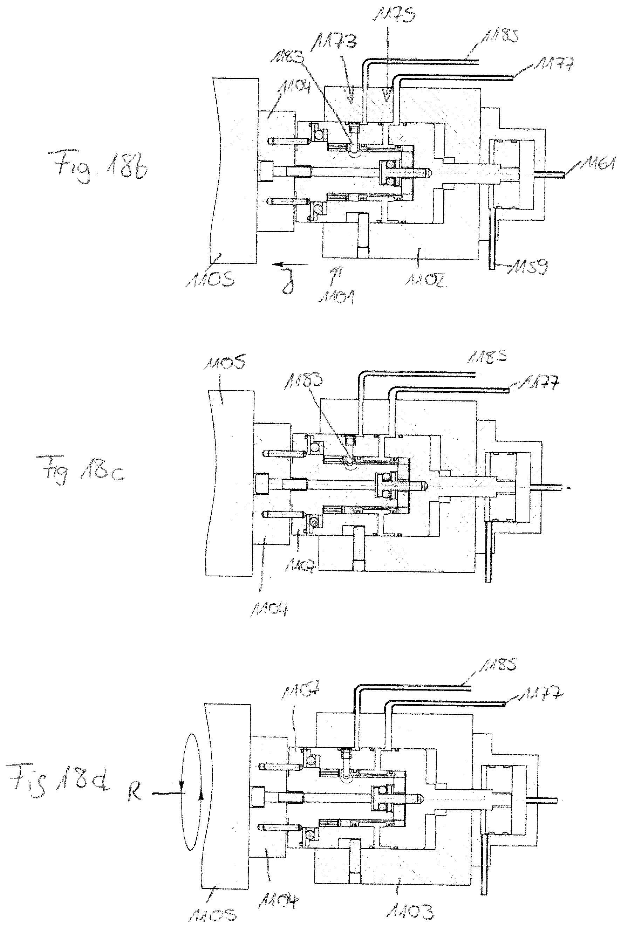

In der Figur 18a befindet sich das Arretierelement 1183 in einer Arretierposition. Dadurch wird erreicht, dass die Klemmbacke 1107 nicht nur in einer beliebigen Drehposition um die Achse R, sondern in einer vorbestimmten Drehposition arretiert ist. Ist ein Einspannen des Werkstücks gewünscht, so wird ein Hydraulikfluid über die Leitung 1161 eingebracht, während die Zuführung des Hydraulikfluids über die Leitung 1159 unterbrochen wird. Dies bewirkt eine Bewegung der Backe 1107 in Richtung J in Figur 18b, so dass das Klemmstückteil 1104 in Kontakt mit dem Werkstück 1105 kommt. In dieser Position ist die Klemmbacke 1107 weiterhin in ihrer Drehposition festgelegt, da sowohl die Arretiereinrichtung 1173 als auch die Feststelleinrichtung 1175 durch Zuführung eines Hydraulikfluids über die Leitungen 1185 und 1177 festgesetzt sind.

Um eine Drehung der Spannbacke 1107 relativ zu dem Gehäuse 1102 zu ermöglichen, wird zunächst das Arretierelement 1183 der Arretiereinrichtung 1173 von der Arretierposition (Figur 18b) in eine Freigabeposition (Figure 18c) überführt, in dem die Beaufschlagung der Leitung 114835 mit einem Hydraulikfluid unterbunden wird. Dies bewirkt, dass das Arretierelement 1183 in Form eines Mitnehmers sich von der Backe 1107 löst.

Wird nun, wie in Figur 18d dargestellt, auch die Zufuhr von Hydraulikfluid über die Leitung 1177 beendet, wird die Feststellung der Backe 1107 über den Klemmschuh der Feststelleinrichtung 1175 gelöst und die Stützspindel und damit das Werkstück 1105 können sich um die Achse R drehen. Dieser Zustand ist in Figur 18d dargestellt.

Im Folgenden kann das Werkstück nun bearbeitet werden unter gleichzeitiger Drehung um die Achse R über die nicht dargestellte Antriebsspindel. Die Verwendung der Arretiereinrichtung 1173 und der Festelleinrichtung 1177 bietet nun den Vorteil, dass nach Bearbeitung des Werkstücks 1105, insbesondere zur Zuführung eines weiteren Werkstücks über eine Robotersteuerung, die Stützspindel 1101 in eine vorbestimmte Ausgangsposition gebracht werden kann, um bei nachfolgenden Bearbeitungen von Werkstücken 1105 stets einen definierten Anfangszustand der Stützspindel sicherzustellen.

Insbesondere in solchen Fällen, in denen das Werkstück 1105 nicht nur kraft-, sondern auch teilweise formschlüssig über die Stützspindel abgestützt wird, ist diese vordefinierte Anfangsposition essentiell. Nach Bearbeitung des Werkstücks wird daher zunächst die Arretiereinrichtung 1173 aktiviert, wobei die Bewegung des Arretierelements 1183 aus der Freigabe- in die Arretierstellung bewirkt, dass die Stützbacke 1107 in die vordefinierte Drehposition überführt wird. Da in diesem Zustand die Feststelleinrichtung 1175 die Backe 1107 freigibt, wird durch die Bewegung des Arretierelements 1183 die Backe 1107 weiter um die Achse R solange gedreht, bis das Arretierelement 1183 in die Arretierposition überführt ist. Anschließend kann die Stützbacke 1007 über die Feststelleinrichtung 1175 in der gewünschten Position festgestellt werden und die Klemmung des Werkstücks 1105 aufgehoben werden. Danach beginnt der Zyklus erneut in der in Fig. 18a dargestellten Position.

### Bezugszeichen

- 1: Gehäuse
- 2: Gehäuse
- 3: Stützspindel
- 4: Klemmstück
- 5, 5': Werkstück
- 7: Klemmstück
- 8, 8': Spannfläche
- 9,9': Spannfläche
- 10: Fräser
- 11: Antriebsspindel
- 20: Maschinengestell

- R: Achse

- K1: Klemmkraft

- K1a: Kraftkomponente
- K1b: Kraftkomponente

- α: Winkel

- 101,501,601,701,1001: Gehäuse
- 102, 502, 602, 702, 1002, 1102: Gehäuse
- 103, 503, 603, 703, 903, 1003: Stützspindel
- 104, 204, 304, 404, 504, 804, 1004', 1104: Klemmstückteil
- 105, 505, 605, 705, 905, 1005, 1005', 1105: Werkstück
- 106, 206, 306, 406, 506, 606, 706, 1006': Klemmstückteil
- 107, 507, 607, 707, 907, 1107': Klemmstück
- 108, 508, 608, 708, 908: Spannfläche
- 109, 509, 609, 709, 909: Spannfläche
- 110, 510, 610. 710, 910, 1010, 1001': Fräser
- 111, 511, 611, 711, 911, 1011, 1011': Antriebsspindel
- 114: Sicherungsstift
- 115, 915: Befestigungsschraube
- 116, 216, 316, 416: Kontaktfläche
- 119, 919: Klemmfläche
- 120, 520, 620, 720: Maschinengestell
- 124, 924: Klemmfläche
- 125, 225, 325, 425: Oberfläche

- 217, 317: Kontaktfläche
- 227, 227: Oberfläche

- 421, 821: Lagerstift
- 422, 822: Fluidkanal
- 423, 823: Fluidanschluss

- 512, 612, 712, 912, 1012': Stufe

- 927: Klemmstück
- 929: Klemmstückelement
- 931: Klemmstückelement
- 933: Klemmstückelement
- 935: Klemmstückelement
- 937: Führungseinrichtung
- 939: Befestigungsschrauben
- 941: Befestigungsschrauben

- 1051, 1051': Mehrspannelement
- 1053, 1053': Befestigungseinrichtung
- 1055, 1055': Einzelwerkstück

- 1101: Stützspindelanordnung
- 1157: Hydraulikkammer
- 1159: Anschluss
- 1161: Anschluss
- 1163: Teilkammer
- 1165: Kolben
- 1167: Teilkammer
- 1169: Begrenzungselement
- 1171: Ausnehmung
- 1173: Arretiereinrichtung
- 1175: Feststelleinrichtung
- 1177: Hydraulikleitung
- 1179: Hydraulikleitung
- 1181: Klemmschuh
- 1183: Aretierelement
- 1185: Hydraulikleitung
- 1187: Federelement

- α': Winkel

- d1: Abstand

- F1, F2: Fläche

- A, B, C, D, E, F, G, H, I, J: Richtung
- V: Verschiebungsrichtung

## Patentansprüche

1. Werkstückhaltevorrichtung für mehrseitig zu bearbeitende Werkstücke (105), wobei das Werkstück (105) zwischen einer mit zumindest einer Stützspindel (103) der Werkstückhaltevorrichtung in Wirkverbindung stehenden und um eine erste Achse (R) drehbaren ersten Werkstückhalterung (104, 106) und zumindest einer mit zumindest einer Antriebsspindel (111) der Werkstückhaltevorrichtung in Wirkverbindung stehenden und um die erste Achse (R) drehbaren zweiten Werkstückhalterung (107) bezüglich der ersten Achse (R) axial, radial und durch Kraftschluss mittels einer zwischen der ersten Werkstückhalterung (104, 106) und der zweiten Werkstückhalterung (107) in axialer Richtung der ersten Achse (R) schraubstockartig aufbaubaren und auf gegenüberliegende Seiten des Werkstücks (105) wirkenden Klemmkraft haltbar ist, wobei die erste Werkstückhalterung zumindest ein erstes Klemmstück (104, 106) mit einer der zweiten Werkstückhalterung (107) und/oder dem Werkstück (105) zugewandten ersten ebenen Klemmfläche (119) und die zweite Werkstückhalterung zumindest ein zweites Klemmstück (107) mit einer der ersten Werkstückhalterung (104, 106) und/oder dem Werkstück (105) zugewandten zweiten ebenen Klemmfläche (124) aufweist bzw. aufweisen, wobei die Werkstückhaltevorrichtung ferner zumindest eine Arretiereinrichtung (1173), mittels der die erste Werkstückhalterung und/oder das erste Klemmstück in zumindest einer ersten vorbestimmten Drehposition um die erste Achse arretierbar ist bzw. sind, umfasst, **dadurch gekennzeichnet, dass** mittels der Arretiereinrichtung durch eine Bewegung eines Arretierelements (1183) der Arretiereinrichtung aus einer Freigabestellung in eine Arretierstellung die erste Werkstückhalterung und/oder das erste Klemmstück aus einer von der vorbestimmten Drehposition unterschiedlichen Drehposition in die vorbestimmte Drehposition bewegbar ist bzw. sind.

2. Werrkstückhaltevorrichtung nach Anspruch 1, **dadurch gekennzeichnet, dass** das erste Klemmstück (104, 106) und/oder das zweite Klemmstück mehrteilig aufgebaut ist bzw. sind, wobei ein erstes Klemmstückteil (104) des jeweiligen Klemmstücks derartig relativ zu einem zweiten Klemmstückteil (106) des betreffenden Klemmstücks bewegbar ist, dass ein erster Winkel (α') zwischen der ersten Achse (R) und der Normalenrichtung der ersten Klemmfläche (119) und/oder ein zweiter Winkel zwischen der ersten Achse und der Normalenrichtung der zweiten Klemmfläche veränderbar ist.

3. Werkstückhaltevorrichtung nach Anspruch 1 oder 2, **dadurch gekennzeichnet, dass** das erste Klemmstück (104, 106) und/oder das zweite Klemmstück zweiteilig aufgebaut ist bzw. sind, die Stützspindel (103) in zumindest einem ersten Gehäuse (102) gelagert ist und/oder die Stützspindel (103) und/oder das erste Gehäuse (102), vorzugsweise mittels zumindest einer Antriebseinrichtung, in koaxialer Richtung der ersten Achse (R) und/oder der Antriebsspindel (111) verschiebbar, vorzugsweise hin- und herbewegbar, gelagert ist und/oder die Antriebsspindel (111) in zumindest einem zweiten Gehäuse (101) gelagert ist und/oder die Antriebsspindel (111) zumindest eine, insbesondere um die erste Achse (R), winkelschaltbare Winkelschalteinrichtung umfasst, wobei insbesondere das erste Gehäuse (102) und das zweite Gehäuse (101) an zumindest einer Tragstruktur, wie einem Maschinengestell (120), gelagert sind.

4. Werkstückhaltevorrichtung nach einem der vorangehenden Ansprüche, **dadurch gekennzeichnet, dass**
die Winkelschalteinrichtung und/oder die Antriebseinrichtung zumindest einen motorischen, elektromotorischen, hydraulischen und/oder pneumatischen Aktuator umfasst,
**dadurch gekennzeichnet, dass**
die durch die erste Werkstückhalterung (104, 106) und die zweite Werkstückhalterung (107) aufgebaute Klemmkraft im wesentlichen ausschließlich kraftschlüssig wirkt, **dadurch gekennzeichnet, dass**
die erste Klemmfläche (119) und/oder die zweite Klemmfläche (124) auf der dem ersten Klemmstückteil (104) abgewandten Oberfläche des zweiten Klemmstückteils (106) angeordnet ist bzw. sind und/oder im Bereich der ersten Klemmfläche (119) und/oder im Bereich der zweiten Klemmfläche (124) eine einen Reibungswiderstand erhöhende Struktur, wie eine Riffelung und/oder einen Belag vorhanden ist, und/oder **dadurch gekennzeichnet, dass**
das erste Klemmstückteil (104) und das zweite Klemmstückteil (106) über zumindest ein Gelenklager (115, 114), vorzugsweise verliersicher und/oder drehmitnahmesicher, miteinander verbunden sind.

5. Werkstückhaltevorrichtung nach einem der vorangehenden Ansprüche, **dadurch gekennzeichnet, dass**
das erste Klemmstückteil (104) im Bereich zumindest einer ersten Kontaktfläche (116) mit zumindest einer zweiten Kontaktfläche (217) des zweiten Klemmstückteils (206) in Kontakt steht, wobei die erste Achse (R) durch einen Schwerpunkt der ersten Kontaktfläche (104), insbesondere einer Projektion der ersten Kontaktfläche (104) in eine Ebene senkrecht zu der ersten Achse (R), und/oder einen Schwerpunkt der zweiten Kontaktfläche (217), insbesondere einer Projektion der zweiten Kontaktfläche (217) in eine Ebene senkrecht zu der ersten Achse (R), verläuft, wobei insbesondere die erste Kontaktfläche (116) kleiner als eine dem zweiten Klemmstückteil (106) zugewandte erste Oberfläche (125) des ersten Klemmstückteils (104) und/oder die zweite Kontaktfläche (217) kleiner als eine dem ersten Klemmstückteil (104) zugewandte zweite Oberfläche (227) des zweiten Klemmstückteils (206) ist bzw. sind, wobei vorzugsweise die Fläche der ersten Oberfläche (125) mehr als 125% der Fläche der ersten Kontaktfläche (116) beträgt und/oder die Fläche der zweiten Oberfläche (227) mehr als 125% der Fläche der zweiten Kontaktfläche (217) beträgt, und/oder die erste Kontaktfläche (116) zumindest bereichsweise von der ersten Oberfläche (125) vorsteht und/oder die zweite Kontaktfläche (217) zumindest bereichsweise von der zweiten Oberfläche (227) vorsteht, insbesondere die erste Kontaktfläche (116) und/oder die zweite Kontaktfläche (217) zumindest bereichsweise senkrecht zu der ersten Achse (R) verläuft, zumindest bereichsweise in einer durch die erste Achse (R) und eine Senkrechte zu der ersten Achse (R) aufgespannten Ebene eine gewölbte Kontur aufweist und/oder geneigt verläuft, und/oder
insbesondere die erste Kontaktfläche (116) und/oder die zweite Kontaktfläche (217) in einer Ebene senkrecht zu der ersten Achse (R) eine quadratische, kreisförmige, elliptische und/oder rechteckförmige Umfangsform aufweist bzw. aufweisen.

6. Werkstückhaltevorrichtung nach Anspruch 4 oder 5, **dadurch gekennzeichnet, dass** das Gelenklager zumindest ein das erste Klemmstückteil (104) und das zweite Klemmstückteil (106) zumindest bereichsweise durchdringendes Befestigungselement, wie zumindest einen Befestigungsbolzen, zumindest eine Befestigungsschraube (115) und/oder zumindest einen Sicherungsbolzen (114) umfasst, wobei vorzugsweise eine Mehrzahl von Befestigungselementen (114, 115) vorgesehen ist, das Befestigungselement (115) zumindest bereichsweise in die Antriebsspindel oder die Stützspindel (103) hineinragt, insbesondere mittels zumindest einer Verbindungseinrichtung mit der Antriebsspindel oder der Stützspindel (103) verbunden ist, und/oder das zweite Klemmstückteil (106) relativ zu dem Befestigungselement (114, 115) bewegbar ist, insbesondere mit Spiel auf dem Befestigungselement (114, 115) gelagert ist, insbesondere die Verbindungseinrichtung zumindest eine Schraubverbindung, zumindest eine Rastverbindung, zumindest eine Klipsverbindung und/oder zumindest eine Adhäsionsverbindung umfasst.

7. Werkstückhaltevorrichtung nach einem der vorangehenden Ansprüche, **gekennzeichnet durch**
zumindest eine zumindest bereichsweise zwischen dem ersten Klemmstückteil (804) und dem zweiten Klemmstückteil (106) angeordnete Rückstelleinrichtung, wobei insbesondere die Rückstelleinrichtung zumindest eine vorzugsweise eine mechanische, hydraulische und/oder pneumatische Federeinrichtung (421, 422, 423, 821, 822, 823) umfasst, vorzugsweise die Federeinrichtung zumindest einen zumindest bereichsweise in dem ersten Klemmstückteil (804) gelagerten und an dem zweiten Klemmstückteil (106), vorzugsweise der zweiten Kontaktfläche (217) und/oder der zweiten Oberfläche (227) anliegenden, und/oder zumindest einen zumindest bereichsweise in dem zweiten Klemmstückteil (406) gelagerten und an dem ersten Klemmstückteil (104), vorzugsweise der ersten Kontaktfläche (125) und/oder der ersten Oberfläche (125) anliegenden, Lagerstift (421, 821) umfasst, wobei vorzugsweise über den Lagerstift (821) auf das zweite Klemmstückteil (106) mittels zumindest eines auf einer dem zweiten Klemmstückteil (106) abgewandten Seite des in dem ersten Klemmstückteil (804) gelagerten Lagerstifts (821) angeordnetes Rückstellelement (822, 823) und/oder über den Lagerstift (421) auf das erste Klemmstückteil (104) mittels zumindest eines auf einer dem ersten Klemmstückteil (104) abgewandten Seite des in dem zweiten Klemmstückteil (406) gelagerten Lagerstifts (421) angeordnetes Rückstellelement (422, 423) eine Rückstellkraft ausübbar ist, vorzugsweise das Rückstellelement zumindest ein mechanisches Federelement, zumindest ein zumindest ein kompressibles oder inkompressibles Fluid umfassendes Fluidfederelement, vorzugsweise ein hydraulisches oder pneumatische Federelement, umfasst, insbesondere das Fluidfederelement zumindest bereichsweise **durch** zumindest einen auf der dem zweiten Klemmstückteil (106) abgewandten Seite des in dem ersten Klemmstückteil (804) gelagerten Lagerstifts (821) angeordneten oder **durch** zumindest einen auf der dem ersten Klemmstückteil (104) abgewandten Seite des in dem ersten Klemmstückteil (406) gelagerten Lagerstifts (421) angeordneten, mit dem Fluid gefüllten Freiraum (422, 423, 822, 823) gebildet ist, wobei vorzugsweise eine Mehrzahl von Lagerstiften (421, 821) und Fluidfederelemente vorgesehen ist und zumindest zwei Freiräume, vorzugsweise alle Freiräume, mittels zumindest eines, insbesondere zumindest bereichsweise in dem ersten Klemmstückteil (804) und/oder dem zweiten Klemmstückteil (406) ausgebildeten Fluidkanals (422, 822) miteinander verbunden sind, wobei vorzugsweise der Druck des Fluids in dem Freiraum und/oder in dem Kanal mittels zumindest eines Fluidanschlusses (423, 823) einstellbar ist.

8. Werkstückhaltevorrichtung nach einem der vorangehenden Ansprüche, **dadurch gekennzeichnet, dass**
das erste Klemmstück, das zweite Klemmstück, das erste Klemmstückteil und/oder das zweite Klemmstückteil auf einer dem Werkstück zugewandten Seite zumindest eine Erhebung, wie eine Stufe, umfasst, wobei vorzugsweise das Werkstück zumindest bereichsweise mittels der Erhebung formschlüssig haltbar ist, insbesondere das Werkstück zumindest bereichsweise an der Erhebung anliegt.

9. Werkstückhaltevorrichtung nach einem der vorangehenden Ansprüche, **dadurch gekennzeichnet, dass**
das erste Klemmstück, das zweite Klemmstück, das erste Klemmstückteil und/oder das zweite Klemmstückteil mehrteilig, vorzugsweise zweiteilig, aufgebaut ist bzw. sind, wobei zumindest ein erstes Klemmstückelement des jeweiligen Klemmstücks und/oder Klemmstückteils relativ zu zumindest einem zweiten Klemmstückelement des betroffenen Klemmstücks und/oder Klemmstückteils in eine Verschiebungsrichtung, insbesondere eine radiale Richtung der ersten Achse, bewegbar ist, wobei vorzugsweise die Werkstückhaltevorrichtung **gekennzeichnet ist durch**
zumindest eine Führungseinrichtung, mittels der das erste Klemmstückelement und das zweite Klemmstückelement entlang der Verschiebungsrichtung relativ zueinander geführt sind, vorzugsweise umfassend zumindest ein Bewegungsgewinde, zumindest eine Verzahnung, zumindest eine Nut-Federverbindung und/oder zumindest eine Schwalbenschwanzführung, und/oder die Werkstückhaltevorrichtung **dadurch** gekennzeichnet ist, dass
die Bewegung entlang der Verschiebungsrichtung mittels zumindest einer Verschiebungseinrichtung einstellbar, steuerbar und/oder regelbar ist, vorzugsweise die Verschiebungseinrichtung zumindest eine Rändelschraube, zumindest ein Bewegungsgewinde und/oder zumindest einen elektrischen, pneumatischen, hydraulischen und/oder mechanischen Verschiebungsaktuator umfasst.

10. Werkstückhaltevorrichtung nach einem der vorangehenden Ansprüche, **dadurch gekennzeichnet, dass**
das Werkstück zumindest ein Mehrfachspannelement umfasst, wobei zumindest ein Einzelwerkstück, vorzugsweise eine Mehrzahl von Einzelwerkstücken, mittels zumindest einer Befestigungseinrichtung mit dem Mehrfachspannelement verbindbar ist, wobei insbesondere das Einzelwerkstück mittels der Befestigungseinrichtung kraft- und/oder formschlüssig mit dem Mehrfachspannelement verbindbar ist und/oder eine Mehrzahl von Befestigungseinrichtungen entlang der ersten Ache und/oder entlang einer Oberfläche des Mehrfachspannelements um einen Umfang um die erste Achse vorhanden ist und/oder das Mehrfachspannelement an der ersten Werkstückhalterung, der zweiten Werkstückhalterung, dem ersten Klemmstück, dem zweiten Klemmstück, dem ersten Klemmstückteil, dem zweiten Klemmstückteil, dem ersten Klemmstückelement und/oder dem zweiten Klemmstückelement anliegt.

11. Werkstückhaltevorrichtung nach einem der vorangehenden Ansprüche, **dadurch gekennzeichnet, dass**
mittels der Arretiereinrichtung das erste Klemmstückteil, das zweite Klemmstückteil, das erste Klemmstückelement und/oder das zweite Klemmstückelement des ersten Klemmstücks arretierbar ist bzw. sind,
das Arretierelement mittels zumindest eines hydraulischen, pneumatischen, magnetischen, elektromagnetischen und/oder mechanischen Arretieraktuators, vorzugsweise gegen die Kraft zumindest eines Federelementes, in Eingriff mit der ersten Werkstückhalterung, dem ersten Klemmstück, insbesondere dem ersten Klemmstückteil, dem zweiten Klemmstückteil, dem ersten Klemmstückelement und/oder dem zweiten Klemmstückelement des ersten Klemmstücks, bringbar ist bzw. sind, und/oder mittels der Arretiereinrichtung das erste Klemmstückteil, das zweite Klemmstückteil, das erste Klemmstückelement und/oder das zweite Klemmstückelement des ersten Klemmstücks aus der von der vorbestimmten Drehposition unterschiedlichen Drehposition in die vorbestimmte Drehposition bewegbar ist bzw. sind.

12. Werkstückhaltevorrichtung nach einem der vorangehenden Ansprüchen, **gekennzeichnet durch**
zumindest eine Feststelleinrichtung mittels der die erste Werkstückhalterung, die zweite Werkstückhalterung, das erste Klemmstück, das zweite Klemmstück, das erste Klemmstückteil, das zweite Klemmstückteil, das erste Klemmstückelement und/oder das zweite Klemmstückelement in einer beliebigen Drehposition um die erste Achse feststellbar ist bzw. sind, wobei vorzugsweise die Feststelleinrichtung zumindest einen hydraulischen, pneumatischen, magnetischen, elektromagnetischen und/oder mechanischen Feststellaktuator umfasst.

13. Verfahren zur Bestückung einer Werkstückhaltevorrichtung, insbesondere einer Werkstückhaltevorrichtung nach einem der vorangehenden Ansprüche mit zumindest einem, insbesondere mehrseitig zu bearbeitenden Werkstück, wobei das Werkstück zwischen einer mit zumindest einer Stützspindel der Werkstückhaltevorrichtung in Wirkverbindung stehenden und um eine erste Achse drehbaren ersten Werkstückhalterung und zumindest einer mit zumindest einer Antriebsspindel der Werkstückhaltevorrichtung in Wirkverbindung stehenden und um die erste Achse drehbaren zweiten Werkstückhalterung bezüglich der ersten Achse axial, radial und durch Kraftschluss mittels einer zwischen der ersten Werkstückhalterung und der zweiten Werkstückhalterung in axialer Richtung der ersten Achse schraubstockartig aufbaubaren und auf gegenüberliegende Seiten des Werkstücks wirkenden Klemmkraft gehalten wird, und die erste Werkstückhalterung und/oder ein erstes Klemmstück der ersten Werkstückhalterung zumindest indirekt mittels zumindest einer Arretiereinrichtung vor und/oder während des Aufbaus der Klemmkraft und/oder während und/oder nach Abbau der Klemmkraft in zumindest einer vorbestimmten Drehposition um die erste Ache arretiert wird bzw. werden, **dadurch gekennzeichnet, dass**
mittels der Arretiereinrichtung die erste Werkstückhalterung und/oder das erste Klemmstück aus einer von der vorbestimmten Drehposition unterschiedlichen Drehposition in die vorbestimmte Drehposition bewegt wird bzw. werden.

14. Verfahren nach Anspruch 13, **dadurch gekennzeichnet, dass** mittels der Arretiereinrichtung ein erstes Klemmstückteil, ein zweites Klemmstückteil, ein erstes Klemmstückelement und/oder ein zweites Klemmstückelement des ersten Klemmstücks arretiert wird bzw. werden,
**dadurch gekennzeichnet, dass**
mittels der Arretiereinrichtung das erste Klemmstückteil, das zweite Klemmstückteil, das erste Klemmstückelement und/oder das zweite Klemmstückelement aus der von der vorbestimmten Drehposition unterschiedlichen Drehposition in die vorbestimmte Drehposition bewegt wird bzw. werden, und/oder **dadurch gekennzeichnet, dass** das Werkstück automatisch, zumindest semiautomatisch, vorzugsweise mittels zumindest einer Robotoreinrichtung, zwischen der ersten Werkstückhalterung und der zweiten Werkstückhalterung positioniert wird.

## Claims

1. A workpiece holder device for workpieces (105) to be machined from multiple sides, wherein the workpiece (105) can be held between a first workpiece holder (104, 106), which is operatively connected to at least one support spindle (103) of the workpiece holder device and rotatable about a first axis (R), and at least one second workpiece holder (107), which is operatively connected to at least one drive spindle (111) of the workpiece holder device and rotatable about the first axis (R), relative to the first axis (R) axially , radially and by force locking by means of a clamping force which can be built up in the manner of a vice between the first workpiece holder (104, 106) and the second workpiece holder (107) in axial direction of the first axis (R) and which acts on opposite sides of the workpiece (105), wherein the first workpiece holder has at least one first clamping element (104, 106) with a first flat clamping surface (119) facing towards the second workpiece holder (107) and/or the workpiece (105) and the second workpiece holder has at least one second clamping element (107) with a second flat clamping surface (124) facing towards the first workpiece holder (104, 106) and/or the workpiece (105), wherein the workpiece holder device further comprises at least one arresting apparatus (1173) by means of which the first workpiece holder and/or the first clamping element can be arrested in at least one predetermined rotational position about the first axis, **characterized in that**
the first workpiece holder and/or the first clamping element is or are movable from a rotational position that is different from the predetermined rotational position to the predetermined rotational position by means of the arresting apparatus through a movement of an arresting element (1183) of the arresting apparatus from an unlocked position to a locked position.

2. The workpiece holder device of claim 1, **characterized in that**
the first clamping element (104, 106) and/or the second clamping element is or are constructed in multiple parts, wherein a first clamping element part (104) of the particular clamping element can be moved relatively to a second clamping element part (106) of the respective clamping element in such a manner that a first angle (α') between the first axis (R) and the normal direction of the first clamping surface (119) and/or a second angle between the first axis and the normal direction of the second clamping surface can be varied.

3. The workpiece holder device of claim 1 or 2, **characterized in that**
the first clamping element (104, 106) and/or the second clamping element is or are constructed in two pieces, the support spindle (103) is mounted in at least one first housing (102) and/or the support spindle (103) and/or the first housing (102) are mounted so that they can be shifted, preferably moved backwards and forwards, in the coaxial direction of the first axis (R) and/or the drive spindle (111) preferably by means of at least one drive means, and/or the drive spindle (111) is mounted in at least one second housing (101), and/or the drive spindle (111) comprises at least one angle switching means, in particular one switchable at angles about the first axis (R), wherein in particular the first housing (102) and the second housing (101) are mounted on at least one support structure, such as a machine frame (120).

4. The workpiece holder device according to any one of the preceding claims, **characterized in that**
the angle switching means and/or the drive means comprise at least one motorized, electromotive, hydraulic and/or pneumatic actuator,
**characterized in that**
the clamping force built up by the first workpiece holder (104, 106) and the second workpiece holder (107) acts essentially solely by force locking,
**characterized in that**
the first clamping surface (119) and/or the second clamping surface (124) is or are arranged on the surface of the second clamping element part (106) that faces away from the first clamping element part (104) and/or a structure that increases a frictional resistance, such as a ribbing and/or a coating, is present in the region of the first clamping surface (119) and/or in the region of the second clamping surface (124), and/or
**characterized in that**
the first clamping element part (104) and the second clamping element part (106) are connected, preferably connected undetachably and/or in a rotationally secure way, through at least one hinge bearing (115, 114).

5. The workpiece holder device according to any one of the preceding claims, **characterized in that**
the first clamping element part (104) contacts in the region of at least one first contact surface (116) at least one second contact surface (217) of the second clamping element part (206), wherein the first axis (R) extends through a center of gravity of the first contact surface (104), in particular a projection of the first contact surface (104) in a plane perpendicular to the first axis (R), and/or a center of gravity of the second contact surface (217), in particular a projection of the second contact surface (217) in a plane perpendicular to the first axis (R), wherein in particular the first contact surface (116) is smaller than a first surface (125) of the first clamping element part (104) that faces the second clamping element part (106) and/or the second contact surface (217) is smaller than a second surface (227) of the second clamping element part (206) that faces the first clamping element part (104), wherein preferably the area of the first surface (125) is more than 125% of the area of the first contact surface (116) and/or the area of the second surface (227) is more than 125% of the area of the second contact surface (217), and/or the first contact surface (116) protrudes, at least in sections, from the first surface (125) and/or the second contact surface (217) protrudes, at least in sections, from the second surface (227),
in particular the first contact surface (116) and/or the second contact surface (217) extends, at least in sections, perpendicular to the first axis (R) has, at least in sections, an curved contour in a plane spanned by the first axis (R) and a perpendicular line to the first axis (R) and/or extends inclined, and/or
in particular the first contact surface (116) and/or the second contact surface (217) has or have a square, circular, elliptical and/or rectangular perimeter shape in a plane perpendicular to the first axis (R).

6. The workpiece holder device of claim 4 or 5, **characterized in that**
the hinge bearing comprises at least one fixing element, such as at least one fastening bolt, at least one fastening screw (115) and/or at least one safety bolt (114), which penetrates, at least in sections, the first clamping element part (104) and the second clamping element part (106), wherein preferably a plurality of fixing elements (114, 115) is provided, the fixing element (115) protrudes, at least in sections, into the drive spindle or the support spindle (103), is in particular connected with the drive spindle or the support spindle (103) by means of at least one connecting means, and/or the second clamping element part (106) can be moved relatively to the fixing element (114, 115), is in particular mounted with some play on the fixing element (114, 115), in particular the connecting means comprises at least one screw connection, at least one snap-in connection, at least one clip-on connection and/or at least one adhesive connection.

7. The workpiece holder device according to any one of the preceding claims, **characterized by**
at least one resetting means arranged, at least in sections, between the first clamping element part (804) and the second clamping element part (106), wherein in particular the resetting means comprises a, preferably a mechanical, hydraulic and/or pneumatic spring means (421, 422, 423, 821, 822, 823), preferably the spring means comprises at least one bearing pin (421, 821) which is mounted, at least in sections, in the first clamping element part (804) and abuts on the second clamping element part (106), preferably on the second contact surface (217) and/or the second surface (227), and/or at least one bearing pin (421, 821) which is mounted, at least in sections, in the second clamping element part (406) and abuts on the first clamping element part (104), preferably on the first contact surface (125) and/or the first surface (125), wherein preferably a resetting force can be exerted on the second clamping element part (106) through the bearing pin (821) by means of at least one resetting element (822, 823) arranged on a side of the bearing pin (821) mounted in the first clamping element part (804) that is facing away from the second clamping element part (106) and/or on the first clamping element part (104) through the bearing pin (421) by means of at least one resetting element (422, 423) arranged on a side of the bearing pin (421) mounted in the second clamping element part (406) that is facing away from the first clamping element part (104), preferably the resetting element comprises at least one mechanical spring element, at least one fluid spring element comprising at least one compressible or incompressible fluid, preferably a hydraulic or pneumatic spring element, in particular the fluid spring element is formed, at least in sections, by at least one free space (422, 423, 822, 823) which is filled with the fluid and arranged on the side of the bearing pin (821) mounted in the first clamping element part (804) that is facing away from the second clamping element part (106) or arranged on the side of the bearing pin (421) mounted in the first clamping element part (406) that is facing away from the first clamping element part (104), wherein preferably a plurality of bearing pins (421, 821) and fluid spring elements is provided and at least two free spaces, preferably all free spaces, are connected to one another by means of at least one fluid channel (422, 822), in particular one that is formed, at least in sections, in the first clamping element part (804) and/or the second clamping element part (406), wherein preferably the pressure of the fluid in the free space and/or in the channel is adjustable by means of at least one fluid port (423, 823).

8. The workpiece holder device according to any one of the preceding claims, **characterized in that**
the first clamping element, the second clamping element, the first clamping element part and/or the second clamping element part comprise at least one elevation, such as a step, on a side facing towards the workpiece, wherein preferably the workpiece can be held in place through form-locking connection, at least in sections, by means of the elevation, in particular the workpiece abuts, at least in sections, on the elevation.

9. The workpiece holder device according to any one of the preceding claims, **characterized in that**
the first clamping element, the second clamping element, the first clamping element part and/or the second clamping element part is or are constructed in multiple parts, preferably in two parts, wherein at least one first clamping element member of the particular clamping element and/or clamping element part can be moved relatively to at least one second clamping element member of the respective clamping element and/or clamping element part into a displacement direction, in particular a radial direction of the first axis, wherein preferably the workpiece holder device is **characterized by**
at least one guiding means by means of which the first clamping element member and the second clamping element member are guided relatively to one another along the displacement direction, preferably comprising at least one transmission thread, at least one gearing, at least one tongue-and-groove connection and/or at least one dovetail guide, and/or the workpiece holder device is **characterized in that** the movement along the displacement direction can be adjusted, controlled and/or regulated by means of at least one displacement means, preferably the displacement means comprises at least one knurled screw, at least one transmission thread and/or at least one electric, pneumatic, hydraulic and/or mechanical displacement actuator.

10. The workpiece holder device according to any one of the preceding claims, **characterized in that**
the workpiece comprises at least one multiple tensioning element, wherein at least one single workpiece, preferably a plurality of single workpieces, can be connected to the multiple tensioning element by means of at least one fixing means, wherein in particular the single workpiece can be connected by means of the fixing means through force-locking and/or form-locking connection to the multiple tensioning element and/or a plurality of fixing means is present along the first axis and/or along a surface of the multiple tensioning element around a circumference about the first axis and/or the multiple tensioning element abuts on the first workpiece holder, the second workpiece holder, the first clamping element, the second clamping element, the first clamping element part, the second clamping element part, the first clamping element member and/or the second clamping element member.

11. The workpiece holder device according to any one of the preceding claims, **characterized in that**
the first clamping element part, the second clamping element part, the first clamping element member and/or the second clamping element member of the first clamping element can be arrested by means of the arresting apparatus,
the arresting element can be brought into engagement with the first workpiece holder, the first clamping element, in particular the first clamping element part, the second clamping element part, the first clamping element member and/or the second clamping element member of the first clamping element by means of at least one hydraulic, pneumatic, magnetic, electromagnetic and/or mechanical arresting actuator, preferably against the force of at least one spring element, and/or the first clamping element part, the second clamping element part, the first clamping element member and/or the second clamping element member of the first clamping element can be moved from the rotational position that is different from the predetermined rotational position to the predetermined rotational position by means of the arresting apparatus.

12. The workpiece holder device according to any one of the preceding claims, **characterized by**
at least one locking apparatus by means of which the first workpiece holder, the second workpiece holder, the first clamping element, the second clamping element, the first clamping element part, the second clamping element part, the first clamping element member and/or the second clamping element member can be locked in any arbitrary rotational position about the first axis, wherein the locking apparatus preferably comprises at least one hydraulic, pneumatic, magnetic, electromagnetic and/or mechanical locking actuator.

13. A method for mounting at least one workpiece, in particular a workpiece to be machined from multiple sides, in a workpiece holder device, in particular a workpiece holder device according to any one of the preceding claims, wherein the workpiece is held between a first workpiece holder, which is operatively connected to at least one support spindle of the workpiece holder device and rotatable about a first axis, and at least one second workpiece holder, which is operatively connected to at least one drive spindle of the workpiece holder device and rotatable about the first axis, relative to the first axis axially , radially and by force locking by means of a clamping force which can be built up in the manner of a vice between the first workpiece holder and the second workpiece holder in the axial direction of the first axis and which acts on opposite sides of the workpiece, and the first workpiece holder and/or a first clamping element of the first workpiece holder is or are arrested, at least indirectly, in at least one predetermined rotational position about the first axis, by means of at least one arresting apparatus, before and/or while the clamping force is built up and/or while and/or after the clamping force is reduced, **characterized in that**
the first workpiece holder and/or the first clamping elementis or are moved from a rotational position that is different from the predetermined rotational position to the predetermined rotational position by means of the arresting apparatus.

14. The method according to claim 13, **characterized in that**
a first clamping element part, a second clamping element part, a first clamping element member and/or a second clamping element member of the first clamping element is or are arrested by means of the arresting apparatus,
**characterized in that**
the first clamping elementpart, the second clamping elementpart, the first clamping element member and/or the second clamping element member is or are moved from the rotational position that is different from the predetermined rotational position to the predetermined rotational position by means of the arresting apparatus, and/or **characterized in that** the workpiece is positioned automatically, at least semiautomatically, preferably by means of at least one robot apparatus, between the first workpiece holder and the second workpiece holder.

## Revendications

1. Dispositif de maintien de pièce, pour des pièces (105) à usiner sur plusieurs côtés, la pièce (105) pouvant être retenue entre un premier support de pièce (104, 106), en liaison fonctionnelle avec au moins une broche d'appui (103) du dispositif de maintien de pièce et rotatif autour d'un premier axe (R), et au moins un deuxième support de pièce (107), en liaison fonctionnelle avec au moins une broche d'entraînement (111) du dispositif de maintien de pièce et rotatif autour du premier axe (R), par rapport au premier axe (R) axialement, radialement et par friction au moyen d'une force de serrage pouvant être appliquée à la manière d'un étau entre le premier support de pièce (104, 106) et le deuxième support de pièce (107) dans direction axiale du premier axe (R) et s'exerçant sur des côtés opposés de la pièce (105), le premier support de pièce ayant au moins un premier organe de serrage (104, 106) avec une première surface de serrage (119) plane opposée au deuxième support de pièce (107) et/ou à la pièce (105) et le deuxième support de pièce ayant au moins un deuxième organe de serrage (107) avec une deuxième surface de serrage (124) plane opposée au premier support de pièce (104, 106) et/ou à la pièce (105), le dispositif de maintien de pièce comprenant en outre au moins un dispositif de blocage (1173), au moyen duquel le premier support de pièce et/ou le premier organe de serrage peuvent être arrêtés dans au moins une première position de rotation prédéfinie autour du premier axe, **caractérisé en ce qu'**au moyen du dispositif de blocage, le premier support de pièce et/ou le premier organe de serrage sont déplaçables d'une position de rotation différente de la position de rotation prédéfinie vers la position de rotation prédéfinie, par déplacement d'un élément de blocage (1183) du dispositif de blocage d'une position de libération vers une position de blocage.

2. Dispositif de maintien de pièce selon la revendication 1, **caractérisé en ce que** le premier organe de serrage (104, 106) et/ou le deuxième organe de serrage sont constitués de plusieurs pièces, une première pièce d'organe de serrage (104) de chaque organe de serrage étant mobile par rapport à une deuxième pièce d'organe de serrage (106) de l'organe de serrage concerné, de telle manière qu'un premier angle (α') peut être modifié entre le premier axe (R) et la normale à la première surface de serrage (119) et/ou un deuxième angle peut être modifié entre le premier axe et la normale à la deuxième surface de serrage.

3. Dispositif de maintien de pièce selon la revendication 1 ou la revendication 2, **caractérisé en ce que** le premier organe de serrage (104, 106) et/ou le deuxième organe de serrage sont constitués de deux pièces, la broche d'appui (103) est montée dans au moins un premier boîtier (102) et/ou la broche d'appui (103) et/ou le premier boîtier (102) sont montés de manière à être déplaçables, préférentiellement en va-et-vient, préférentiellement au moyen d'au moins un dispositif d'entraînement, dans la direction coaxiale du premier axe (R) et/ou de la broche d'entraînement (111) et/ou la broche d'entraînement (111) est montée dans au moins un deuxième boîtier (101) et/ou la broche d'entraînement (111) comprend au moins un dispositif de commutation d'angle permettant une commutation d'angle en particulier autour du premier axe (R), le premier boîtier (102) et le deuxième boîtier (101) étant en particulier montés sur au moins une structure porteuse telle qu'un bâti de machine (120).

4. Dispositif de maintien de pièce selon l'une des revendications précédentes, **caractérisé en ce que**
le dispositif de commutation d'angle et/ou le dispositif d'entraînement comprennent au moins un actionneur à moteur, à moteur électrique, hydraulique et/ou pneumatique, **caractérisé en ce que**
la force de serrage appliquée par le premier support de pièce (104, 106) et le deuxième support de pièce (107) s'exerce pratiquement exclusivement par friction,
**caractérisé en ce que**
la première surface de serrage (119) et/ou la deuxième surface de serrage (124) sont disposées sur la surface de la deuxième pièce d'organe de serrage (106) distante de la première pièce d'organe de serrage (104) et/ou dans la zone de la première surface de serrage (119) et/ou une structure augmentant une résistance de friction, telle qu'un nervurage et/ou un revêtement est présente dans la zone de la deuxième surface de serrage (124), et/ou **caractérisé en ce que**
la première pièce d'organe de serrage (104) et la deuxième pièce d'organe de serrage (106) sont raccordées l'une à l'autre par au moins un palier pivotant (115, 114), préférentiellement de manière imperdable et/ou solidaire en rotation.

5. Dispositif de maintien de pièce selon l'une des revendications précédentes, **caractérisé en ce que**
la première pièce d'organe de serrage (104) est en contact avec au moins une deuxième surface de contact (217) de la deuxième pièce d'organe de serrage (206) dans la zone d'au moins une première surface de contact (116), le premier axe (R) s'étendant par un centre de gravité de la première surface de contact (104), en particulier d'une projection de la première surface de contact (104) sur un plan perpendiculairement au premier axe (R), et/ou par un centre de gravité de la deuxième surface de contact (217), en particulier d'une projection de la deuxième surface de contact (217) sur un plan perpendiculairement au premier axe (R), la première surface de contact (116) étant en particulier inférieure à une première surface (125) de la première pièce d'organe de serrage (104) opposée à la deuxième pièce d'organe de serrage (106) et/ou la deuxième surface de contact (217) étant inférieure à une deuxième surface (227) de la deuxième pièce d'organe de serrage (206) opposée à la première pièce d'organe de serrage (104), la superficie de la première surface (125) représentant préférentiellement plus de 125 % de la superficie de la première surface de contact (116) et/ou la superficie de la deuxième surface (227) représentant plus de 125 % de la superficie de la deuxième surface de contact (217), et/ou la première surface de contact (116) dépassant au moins partiellement de la première surface (125) et/ou la deuxième surface de contact (217) dépassant au moins partiellement de la deuxième surface (227), en particulier la première surface de contact (116) et/ou la deuxième surface de contact (217) s'étendant au moins en partie perpendiculairement au premier axe (R), ayant un contour courbe et/ou s'étendant obliquement au moins en partie dans un plan défini par le premier axe (R) et une perpendiculaire au premier axe (R), et/ou
en particulier la première surface de contact (116) et/ou la deuxième surface de contact (217) ayant une forme périphérique carrée, circulaire, elliptique et/ou rectangulaire dans un plan perpendiculaire au premier axe (R).

6. Dispositif de maintien de pièce selon la revendication 4 ou la revendication 5, **caractérisé en ce que** le palier pivotant comprend au moins un élément de fixation tel qu'au moins un boulon de fixation, au moins une vis de fixation (115) et/ou au moins un axe de blocage (114), traversant au moins en partie la première pièce d'organe de serrage (104) et la deuxième pièce d'organe de serrage (106), préférentiellement une pluralité d'éléments de fixation (114, 115) étant prévue, l'élément de fixation (115) pénétrant au moins partiellement dans la broche d'entraînement ou la broche d'appui (103), étant en particulier raccordé à la broche d'entraînement ou la broche d'appui (103) au moyen d'au moins un dispositif de connexion, et/ou la deuxième pièce d'organe de serrage (106) étant déplaçable par rapport à l'élément de fixation (114, 115), étant en particulier montée avec un jeu sur l'élément de fixation (114, 115), le dispositif de connexion comprenant en particulier au moins une connexion par vis, au moins une connexion par enclenchement, au moins une connexion par clipsage et/ou au moins une connexion par adhérence.

7. Dispositif de maintien de pièce selon l'une des revendications précédentes, **caractérisé par** au moins un dispositif de rappel disposé au moins en partie entre la première pièce d'organe de serrage (804) et la deuxième pièce d'organe de serrage (106), le dispositif de rappel comprenant en particulier au moins un dispositif de ressort (421, 422, 423, 821, 822, 823) préférentiellement mécanique, hydraulique et/ou pneumatique, le dispositif de ressort comprenant préférentiellement au moins une goupille de palier (421, 821) montée au moins partiellement dans la première pièce d'organe de serrage (804) et appliquée contre la deuxième pièce d'organe de serrage (106), préférentiellement la deuxième surface de contact (217) et/ou la deuxième surface (227), et/ou au moins une goupille de palier (421, 821) montée au moins partiellement dans la deuxième pièce d'organe de serrage (406) et appliquée contre la première pièce d'organe de serrage (104), préférentiellement la première surface de contact (125) et/ou la première surface (125), préférentiellement une force de rappel étant exerçable par la goupille de palier (821) sur la deuxième pièce d'organe de serrage (106) au moyen d'au moins un élément de rappel (822, 823) disposé sur un côté de la goupille de palier (821) montée dans la première pièce d'organe de serrage (804), distant de la deuxième pièce d'organe de serrage (106) et/ou par la goupille de palier (421) sur la première pièce d'organe de serrage (104) au moyen d'au moins un élément de rappel (422, 423) disposé sur un côté de la goupille de palier (421) montée dans la deuxième pièce d'organe de serrage (406) distant de la première pièce d'organe de serrage (104), l'élément de rappel comprenant préférentiellement au moins un élément de ressort mécanique, au moins un élément de ressort à fluide contenant au moins un fluide compressible ou incompressible, préférentiellement un élément de ressort hydraulique ou pneumatique, l'élément de ressort à fluide étant en particulier au moins partiellement formé par au moins un espace libre (422, 423, 822, 823) rempli de fluide disposé sur le côté, distant de la deuxième pièce d'organe de serrage (106), de la goupille de palier (821) montée dans la première pièce d'organe de serrage (804) ou par au moins un espace libre (422, 423, 822, 823) rempli de fluide disposé sur le côté, distant de la première pièce d'organe de serrage (104), de la goupille de palier (421) montée dans la première pièce d'organe de serrage (406), préférentiellement une pluralité de goupilles de palier (421, 821) et d'éléments de ressort à fluide étant prévue et au moins deux espaces libres, préférentiellement tous les espaces libres, étant reliés entre eux au moyen d'au moins un canal de fluide (422, 822) formé en particulier au moins partiellement dans la première pièce d'organe de serrage (804) et/ou la deuxième pièce d'organe de serrage (406), la pression du fluide dans l'espace libre et/ou dans le canal étant préférentiellement réglable au moyen d'au moins un raccord de fluide (423, 823).

8. Dispositif de maintien de pièce selon l'une des revendications précédentes, **caractérisé en ce que**
le premier organe de serrage, le deuxième organe de serrage, la première pièce d'organe de serrage et/ou la deuxième pièce d'organe de serrage comprenant au moins un relief tel qu'un gradin sur un côté opposé à la pièce, la pièce pouvant préférentiellement être maintenue au moins en partie par correspondance de forme au moyen du relief, la pièce étant en particulier au moins partiellement appliquée contre le relief.

9. Dispositif de maintien de pièce selon l'une des revendications précédentes, **caractérisé en ce que**
le premier organe de serrage, le deuxième organe de serrage, la première pièce d'organe de serrage et/ou la deuxième pièce d'organe de serrage sont constitués de plusieurs pièces, préférentiellement de deux pièces, au moins un premier élément d'organe de serrage de chaque organe de serrage et/ou pièce d'organe de serrage étant mobile dans une direction de déplacement par rapport à au moins un deuxième élément d'organe de serrage de l'organe de serrage et/ou de la pièce d'organe de serrage concernés, en particulier dans une direction radiale du premier axe, le dispositif de maintien de pièce étant préférentiellement **caractérisé par**
au moins un dispositif de guidage, au moyen duquel le premier élément d'organe de serrage et le deuxième élément d'organe de serrage sont guidés l'un par rapport à l'autre le long de la direction de déplacement, comprenant préférentiellement au moins un filet d'entraînement, au moins une denture, au moins une connexion à rainure et languette et/ou au moins un guidage à queue d'aronde, et/ou le dispositif de maintien de pièce étant **caractérisé en ce que**
le déplacement le long de la direction de déplacement peut être réglé, commandé et/ou régulé au moyen d'au moins un dispositif de déplacement, le dispositif de déplacement comprenant préférentiellement au moins une vis moletée, au moins un filet d'entraînement et/ou au moins un actionneur de déplacement électrique, pneumatique, hydraulique et/ou mécanique.

10. Dispositif de maintien de pièce selon l'une des revendications précédentes, **caractérisé en ce que**
la pièce au moins comprend un élément de serrage multiple, au moins une pièce individuelle, préférentiellement une pluralité de pièces individuelles, pouvant être raccordées à l'élément de serrage multiple au moyen d'au moins un dispositif de fixation, la pièce individuelle pouvant en particulier être raccordée de manier de liaison de force et/ou par engagement positif à l'élément de serrage multiple au moyen du dispositif de fixation et/ou une pluralité de dispositifs de fixation étant présentée le long du premier axe et/ou le long d'une surface de l'élément de serrage multiple sur une périphérie autour le premier axe et/ou l'élément de serrage multiple reposant contre le premier support de pièce, le deuxième support de pièce, le premier organe de serrage, le deuxième organe de serrage, la première pièce d'organe de serrage, la deuxième pièce d'organe de serrage, le premier élément d'organe de serrage et/ou le deuxième élément d'organe de serrage.

11. Dispositif de maintien de pièce selon l'une des revendications précédentes, **caractérisé en ce que** la première pièce d'organe de serrage, la deuxième pièce d'organe de serrage, le premier élément d'organe de serrage et/ou le deuxième élément d'organe de serrage du premier organe de serrage sont arrêtables au moyen du dispositif de blocage,
l'élément de blocage peut être mis en contact avec le premier support de pièce, le premier organe de serrage, en particulier la première pièce d'organe de serrage, la deuxième pièce d'organe de serrage, le premier élément d'organe de serrage et/ou le deuxième élément d'organe de serrage du premier organe de serrage au moyen d'au moins un actionneur de blocage hydraulique, pneumatique, magnétique, électromagnétique et/ou mécanique, préférentiellement contre la force d'au moins un élément de ressort, et/ou la première pièce d'organe de serrage, la deuxième pièce d'organe de serrage, le premier élément d'organe de serrage et/ou le deuxième élément d'organe de serrage du premier organe de serrage sont déplaçables de la position de rotation différente de la position de rotation prédéfinie vers la position de rotation prédéfinie au moyen du dispositif de blocage.

12. Dispositif de maintien de pièce selon l'une des revendications précédentes, **caractérisé par** au moins une dispositif d'immobilisation au moyen duquel le premier support de pièce, le deuxième support de pièce, le premier organe de serrage, le deuxième organe de serrage, la première pièce d'organe de serrage, la deuxième pièce d'organe de serrage, le premier élément d'organe de serrage et/ou le deuxième élément d'organe de serrage sont immobilisables dans une position de rotation quelconque autour du premier axe, le dispositif d'immobilisation comprenant préférentiellement au moins un actionneur d'immobilisation hydraulique, pneumatique, magnétique, électromagnétique et/ou mécanique.

13. Procédé d'équipement d'un dispositif de maintien de pièce, en particulier d'un dispositif de maintien de pièce selon l'une des revendications précédentes avec au moins une pièce, en particulier à usiner sur plusieurs côtés, la pièce étant retenue entre un premier support de pièce, en liaison fonctionnelle avec au moins une broche d'appui du dispositif de maintien de pièce et rotatif autour d'un premier axe, et au moins un deuxième support de pièce, en liaison fonctionnelle avec au moins une broche d'entraînement du dispositif de maintien de pièce et rotatif autour du premier axe, par rapport au premier axe axialement, radialement et par friction au moyen d'une force de serrage pouvant être appliquée à la manière d'un étau entre le premier support de pièce et le deuxième support de pièce dans la direction axiale du premier axe et s'exerçant sur des côtés opposés de la pièce, et le premier support de pièce et/ou un premier organe de serrage du premier support de pièce étant arrêtes au moins indirectement dans au moins une position de rotation prédéfinie autour du premier axe au moyen d'au moins un dispositif de blocage avant et/ou pendant l'application de la force de serrage et/ou pendant et/ou après l'application de la force de serrage, **caractérisé en ce que** le premier support de pièce et/ou le premier organe de serrage sont déplacés au moyen du dispositif de blocage d'une position de rotation différente de la position de rotation prédéfinie vers la position de rotation prédéfinie.

14. Procédé selon la revendication 13, **caractérisé en ce que**
une première pièce d'organe de serrage, une deuxième pièce d'organe de serrage, un premier élément d'organe de serrage et/ou un deuxième élément d'organe de serrage du premier organe de serrage sont arrêtes au moyen du dispositif de blocage,
**caractérisé en ce que**
la première pièce d'organe de serrage, la deuxième pièce d'organe de serrage, le premier élément d'organe de serrage et/ou le deuxième élément d'organe de serrage du premier organe de serrage sont déplacés de la position de rotation différente de la position de rotation prédéfinie vers la position de rotation prédéfinie au moyen du dispositif de blocage, et/ou **caractérisé en ce que** la pièce est positionnée automatiquement, au moins semi-automatiquement entre le premier support de pièce et le deuxième support de pièce, préférentiellement au moyen d'au moins un dispositif de robot.
